# EUROPEAN PATENT APPLICATION

(11) **EP 4 790 927 A1**
(43) Date of publication of application: **12.08.2026**
(21) Application number: 24887819.1
(22) Date of filing: 29.10.2024
(51) Int. Cl.: H04L 1/00

(54) **CODE BLOCK TRANSMISSION METHOD AND APPARATUS, DEVICE, SYSTEM, AND CHIP**

(30) Priority: 09.11.2023 CN 202311491706
(71) Applicant: HUAWEI TECHNOLOGIES CO., LTD., Shenzhen, Guangdong 518129 (CN)
(72) Inventor: WANG, Jianbing, Shenzhen, Guangdong 518129 (CN); DING, Li, Shenzhen, Guangdong 518129 (CN); ZHONG, Qiwen, Shenzhen, Guangdong 518129 (CN); SUN, Desheng, Shenzhen, Guangdong 518129 (CN); XIAO, Jie, Shenzhen, Guangdong 518129 (CN); WANG, Qing, Shenzhen, Guangdong 518129 (CN)
(74) Representative: Gill Jennings & Every LLP
(86) International application number: PCT/CN2024/128264
(87) International publication number: WO 2025/098207

(57) **Abstract**

This application discloses a code block transmission method and apparatus, a device, a system, and a chip, and relates to the field of communication technologies. The method is applied to a first control unit connected to a first Ethernet interface, and the method includes: obtaining statuses of N lanes between the first Ethernet interface and a second Ethernet interface; stopping, based on the statuses indicating that M lanes in the N lanes are faulty, transmitting a first code block obtained based on service data to the second Ethernet interface through the M lanes; and transmitting the first code block to the second Ethernet interface through N-M lanes in the N lanes, and transmitting a second code block different from the first code block to the second Ethernet interface through the M lanes, where M is a positive integer less than N. The second code block is transmitted through faulty lanes, and the first code block is transmitted through lanes that are not faulty, to avoid a case in which a plurality of lanes are unavailable because some of the lanes are faulty. In this way, lane reliability is high. Because the first code block can continue to be transmitted, lane utilization is high.

## Description

This application claims priority to Chinese Patent Application No. 202311491706.8, filed on November 9, 2023 and entitled "CODE BLOCK TRANSMISSION METHOD AND APPARATUS, DEVICE, SYSTEM, AND CHIP", which is incorporated herein by reference in its entirety.

### TECHNICAL FIELD

This application relates to the field of communication technologies, and in particular, to a code block transmission method and apparatus, a device, a system, and a chip.

### BACKGROUND

In the field of communication technologies, a signal transmit end transmits a signal to a signal receive end in a form of a code block, and the signal receive end obtains the signal by receiving the code block. The code block includes but is not limited to any one of an 8-bit (bit, B)/10B encoded code block, a 64B/66B encoded code block, or a 256B/257B encoded code block.

### SUMMARY

This application provides a code block transmission method and apparatus, a device, a system, and a chip, so that when some of a plurality of lanes are faulty, a code block obtained based on service data continues to be transmitted through lanes that are not faulty.

According to a first aspect, a code block transmission method is provided, where the method is applied to a first control unit, the first control unit is connected to a first Ethernet interface, and the method includes: obtaining statuses of N lanes between the first Ethernet interface and a second Ethernet interface, where the lanes are used to transmit a first code block obtained based on service data, and N is an integer greater than 1; stopping, based on the statuses indicating that M lanes in the N lanes are faulty, transmitting the first code block to the second Ethernet interface through the M lanes, where M is a positive integer less than N; and transmitting the first code block to the second Ethernet interface through N-M lanes in the N lanes, and transmitting a second code block to the second Ethernet interface through the M lanes, where the second code block is different from the first code block.

In the method provided in this application, the first code block obtained based on the service data is stopped from being transmitted through faulty lanes, to ensure accuracy of transmitting the first code block. In addition, in the method, the second code block used to maintain a transmission rate is transmitted through the faulty lanes, and the first code block is transmitted through lanes that are not faulty, so that all the N lanes can transmit a code block, and a case in which all the N lanes are unavailable because some of the lanes are faulty is avoided. In this way, lane reliability is high. Because the first code block can continue to be transmitted through the lanes that are not faulty, lane utilization is high.

In a possible implementation, obtaining the statuses of the N lanes between the first Ethernet interface and the second Ethernet interface includes: for any lane in the N lanes, receiving, through the any lane, faulty lane indication information of the any lane transmitted by the second Ethernet interface, where the faulty lane indication information indicates a status of the any lane; and obtaining the status of the any lane based on the faulty lane indication information of the any lane. Therefore, a manner of obtaining the statuses of the N lanes is flexible.

In a possible implementation, the faulty lane indication information is obtained based on at least one of a bit error rate of the first code block transmitted through the any lane or a locking situation of an alignment marker (alignment marker, AM) of the any lane. A manner of obtaining the faulty lane indication information is flexible.

In a possible implementation, the second code block includes a code block obtained based on a pseudo-random binary sequence (pseudo-random binary sequence, PRBS). In another possible implementation, for any lane in the M lanes, the second code block transmitted through the any lane includes an AM corresponding to the any lane and a scrambled idle (idle) code block. Therefore, types of the second code block are diversified.

In a possible implementation, after transmitting the first code block to the second Ethernet interface through the N-M lanes in the N lanes, and transmitting the second code block to the second Ethernet interface through the M lanes, the method further includes: obtaining, through K lanes in the M lanes, fault recovery indication information of the K lanes transmitted by the second Ethernet interface, where the fault recovery indication information of the K lanes indicates that the K lanes return to normal, and K is a positive integer less than or equal to M; and stopping, based on the fault recovery indication information of the K lanes, transmitting the second code block to the second Ethernet interface through the K lanes, and transmitting the first code block to the second Ethernet interface through the K lanes and the N-M lanes. When a lane returns to normal, the first code block is transmitted through the lane, so that there are a large quantity of lanes used to transmit the first code block, and efficiency of transmitting the first code block obtained based on the service data is high.

According to a second aspect, a code block transmission method is provided, where the method is applied to a second control unit, the second control unit is connected to a second Ethernet interface, and the method includes: obtaining statuses of N lanes between a first Ethernet interface and the second Ethernet interface, where the lanes are used to transmit a first code block obtained based on service data, and N is an integer greater than 1; stopping, based on the statuses indicating that M lanes in the N lanes are faulty, receiving the first code block from the first Ethernet interface through the M lanes, where M is a positive integer less than N; and receiving the first code block from the first Ethernet interface through N-M lanes in the N lanes, and receiving a second code block from the first Ethernet interface through the M lanes, where the second code block is different from the first code block.

In the method provided in this application, the first code block obtained based on the service data is stopped from being received through faulty lanes, to ensure accuracy of transmitting the first code block. In addition, in the method, the second code block is received through the faulty lanes, and the first code block is received through lanes that are not faulty, so that all the N lanes can transmit a code block, and a case in which all the N lanes are unavailable because some of the lanes are faulty is avoided. In this way, lane reliability is high. Because the first code block can continue to be received through the lanes that are not faulty, lane utilization is high.

In a possible implementation, obtaining the statuses of the N lanes between the first Ethernet interface and the second Ethernet interface includes: obtaining a bit error rate of the first code block transmitted through each lane; and determining, for any lane in the N lanes based on the bit error rate of the first code block transmitted through the any lane being greater than a reference threshold, that a status of the any lane indicates that the any lane is faulty. In another possible implementation, obtaining the statuses of the N lanes between the first Ethernet interface and the second Ethernet interface includes: obtaining a locking situation of an AM of each lane; and determining, for any lane in the N lanes based on the AM of the any lane being unlocked, that a status of the any lane indicates that the any lane is faulty. Therefore, a manner of obtaining the statuses of the N lanes is flexible.

In a possible implementation, the method further includes: transmitting, for any lane in the N lanes, faulty lane indication information of the any lane to the first Ethernet interface through the any lane, where the faulty lane indication information indicates a status of the any lane. Therefore, a first control unit connected to the first Ethernet interface can obtain the faulty lane indication information of each lane through the first Ethernet interface, to determine the status of each lane based on the faulty lane indication information.

In a possible implementation, transmitting the faulty lane indication information of the any lane to the first Ethernet interface through the any lane includes: transmitting a second reference code block to the first Ethernet interface through the any lane, where the second reference code block includes the faulty lane indication information. That is, the faulty lane indication information may be carried in the second reference code block transmitted to the first Ethernet interface. Therefore, when the first control unit connected to the first Ethernet interface obtains the second reference code block, the first control unit can obtain the faulty lane indication information from the second reference code block.

In a possible implementation, the second reference code block is obtained based on an ordered set (ordered set, O) code block. In another possible implementation, the second reference code block is obtained based on an AM, the second reference code block includes a unique pad (unique pad, UP) field, and the UP field includes the faulty lane indication information. In still another possible implementation, the second reference code block is used to form a plurality of 257-bit code blocks with an AM, the second reference code block includes a type field and a status field, a value of the type field indicates that the second reference code block is a code block including the faulty lane indication information, and the status field includes the faulty lane indication information. Therefore, types of the second reference code block are diversified and flexible.

In a possible implementation, the method further includes: transmitting, for any lane in the N lanes, performance deterioration information of the any lane to the first Ethernet interface through the any lane, where the performance deterioration information indicates a performance deterioration situation of the any lane. The performance deterioration information is transmitted, so that the first control unit connected to the first Ethernet interface can know the performance deterioration situation of each lane. In this way, when a lane is faulty, the first control unit can determine a fault type based on the performance deterioration situation of the lane.

In a possible implementation, transmitting the performance deterioration information of the any lane to the first Ethernet interface through the any lane includes: transmitting a third reference code block to the first Ethernet interface through the any lane, where the third reference code block is used to form a plurality of 257-bit code blocks with an AM, the third reference code block includes a type field and a status field, a value of the type field indicates that the third reference code block is a code block including the performance deterioration information, and the status field includes the performance deterioration information. That is, the third reference code block can be obtained by extending a padding bit that is in the Institute of Electrical and Electronics Engineers (Institute of Electrical and Electronics Engineers, IEEE) 802.3 standard and that is used to form a plurality of 257 bits with an AM.

In a possible implementation, after receiving the first code block from the first Ethernet interface through the N-M lanes in the N lanes, and receiving the second code block from the first Ethernet interface through the M lanes, the method further includes: determining, for any transmission lane in the M lanes based on the second code block transmitted through the any lane, whether the any lane returns to normal; when K lanes in the M lanes return to normal, obtaining fault recovery indication information of the K lanes, where the fault recovery indication information of the K lanes indicates that the K lanes return to normal, and K is a positive integer less than or equal to M; and transmitting the fault recovery indication information of the K lanes to the first Ethernet interface through the K lanes. In other words, in the method, a status of a faulty lane can be determined based on the second code block, so that when the faulty lane returns to normal, the first code block can continue to be received through the lane, thereby improving efficiency of receiving the first code block.

In a possible implementation, when the second code block includes a code block obtained based on a PRBS, determining, based on the second code block transmitted through the any lane, whether the any lane returns to normal includes: identifying a PRBS feature for the second code block; and determining, based on the PRBS feature identified for the second code block, that the any lane returns to normal. In another possible implementation, when the second code block transmitted through the any lane includes an AM corresponding to the any lane and a scrambled idle code block, determining, based on the second code block transmitted through the any lane, whether the any lane returns to normal includes: performing AM locking on the second code block; and determining, based on the AM in the second code block being successfully locked, that the any lane returns to normal. The method can be applied to different cases of the second code block, and therefore has a wide range of application scenarios.

According to a third aspect, a code block transmission apparatus is provided, where the apparatus is used in a first control unit, and the apparatus includes: a transceiver module, configured to perform a receiving-related and/or sending-related operation in the first aspect and any possible implementation corresponding to the first aspect; and a processing module, configured to perform an operation other than the receiving-related and/or sending-related operation in the first aspect and any possible implementation corresponding to the first aspect.

According to a fourth aspect, a code block transmission apparatus is provided, where the apparatus is used in a second control unit, and the apparatus includes: a transceiver module, configured to perform a receiving-related and/or sending-related operation in the second aspect and any possible implementation corresponding to the second aspect; and a processing module, configured to perform an operation other than the receiving-related and/or sending-related operation in the second aspect and any possible implementation corresponding to the second aspect.

According to a fifth aspect, an electronic device is provided, where the electronic device includes a processor, the processor is coupled to a memory, the memory stores at least one program instruction or code, and the at least one program instruction or the code is loaded and executed by the processor, to cause the electronic device to implement the code block transmission method according to any one of the first aspect or the second aspect.

According to a sixth aspect, a computer-readable storage medium is provided, where the storage medium stores at least one program instruction or code, and when the program instruction or the code is loaded and executed by a processor of a computer, the computer is caused to implement the code block transmission method according to any one of the first aspect or the second aspect.

According to a seventh aspect, a communication system is provided, where the system includes a first control unit and a second control unit, the first control unit is configured to perform the code block transmission method according to the first aspect, and the second control unit is configured to perform the code block transmission method according to the second aspect.

According to an eighth aspect, another communication apparatus is provided, where the apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, the processor is caused to perform the code block transmission method according to any one of the first aspect or the second aspect.

For example, there are one or more processors, and there are one or more memories.

For example, the memory and the processor may be integrated together, or the memory and the processor are disposed separately.

In a specific implementation process, the memory may be a non-transitory (non-transitory) memory, for example, a read-only memory (read-only memory, ROM). The memory and the processor may be integrated on a same chip, or may be respectively disposed on different chips. A type of the memory and a manner of disposing the memory and the processor are not limited in this application.

According to a ninth aspect, a computer program or a computer program product is provided, where the computer program or the computer program product includes computer program code, and when the computer program code is run by a computer, the computer is caused to perform the code block transmission method according to any one of the first aspect or the second aspect.

According to a tenth aspect, a chip is provided, where the chip includes an interface module, and the interface module is configured to perform the code block transmission method according to any one of the first aspect or the second aspect.

According to an eleventh aspect, a chip is provided, where the chip includes a processor, and the processor is configured to invoke instructions from a memory and run the instructions stored in the memory, to cause a communication device in which the chip is mounted to perform the code block transmission method according to any one of the first aspect or the second aspect. For example, the chip further includes an input interface, an output interface, and the memory. The input interface, the output interface, the processor, and the memory are connected through an internal connection path.

It should be understood that, for beneficial effects achieved by the technical solutions of the third aspect to the eleventh aspect in this application and corresponding possible implementations, refer to technical effects of the technical solutions of the first aspect and the second aspect and the corresponding possible implementations of the first aspect and the second aspect. Details are not described herein again.

### BRIEF DESCRIPTION OF DRAWINGS

FIG. 1 is a diagram of a structure of an optical module according to an embodiment of this application;
FIG. 2 is a diagram of a structure of an AM according to an embodiment of this application;
FIG. 3 is a diagram of a code block stream distribution process according to an embodiment of this application;
FIG. 4 is a diagram of a lane fault according to an embodiment of this application;
FIG. 5 is a diagram of another lane fault according to an embodiment of this application;
FIG. 6 is a diagram of an implementation environment according to an embodiment of this application;
FIG. 7 is a diagram of another implementation environment according to an embodiment of this application;
FIG. 8 is a diagram of a system architecture according to an embodiment of this application;
FIG. 9 is a diagram of a structure of a first module and a second module according to an embodiment of this application;
FIG. 10 is a diagram of a function of an LSANU according to an embodiment of this application;
FIG. 11 is a diagram of a function of an LDRCU according to an embodiment of this application;
FIG. 12 is a diagram of a function of an LFITD according to an embodiment of this application;
FIG. 13 is a flowchart of a code block transmission method according to an embodiment of this application;
FIG. 14 is a diagram of a code block transmission process according to an embodiment of this application;
FIG. 15A and FIG. 15B are diagrams of a structure of a second reference code block according to an embodiment of this application;
FIG. 16 is a diagram of a 400G Ethernet architecture according to an embodiment of this application;
FIG. 17 is a diagram of an AM and a reference code block transmitted through one subPHY according to an embodiment of this application;
FIG. 18 is a flowchart of another code block transmission method according to an embodiment of this application;
FIG. 19 is a diagram of another code block transmission process according to an embodiment of this application;
FIG. 20A and FIG. 20B are diagrams of still another code block transmission process according to an embodiment of this application;
FIG. 21 is a diagram of a structure of a code block transmission apparatus according to an embodiment of this application;
FIG. 22 is a diagram of a structure of another code block transmission apparatus according to an embodiment of this application;
FIG. 23 is a diagram of a structure of a computer system according to an embodiment of this application; and
FIG. 24 is a diagram of a structure of another computer system according to an embodiment of this application.

### DESCRIPTION OF EMBODIMENTS

Terms used in implementations of this application are merely used to explain embodiments of this application, but are not intended to limit this application. The following describes embodiments of this application with reference to accompanying drawings.

For ease of understanding, terms in embodiments of this application are first described.
(1) Virtual lane (virtual lane, VL): The virtual lane is also referred to as a logical lane, where the virtual lane includes but is not limited to at least one of a physical coding sublayer (physical coding sublayer, PCS) lane (lane) or a forward error correction (forward error correction, FEC) lane. For example, in the IEEE 802.3 standard, for a 100 gigabit (gigabit, G) standard Ethernet, a virtual lane is an FEC lane; and for a 200G standard Ethernet and a 400G standard Ethernet, a virtual lane is a PCS lane. A PCS distributes a serial code block stream to a plurality of virtual lanes. In the 100G standard Ethernet, there are four virtual lanes. In the 200G standard Ethernet, there are eight virtual lanes. In the 400G standard Ethernet, there are 16 virtual lanes.
(2) Physical lane (physical lane, PHL): The physical lane includes a physical medium attachment (physical medium attachment, PMA) sublayer lane, and one physical lane can carry data of one or more virtual lanes. In the 100G/200G/400G standard Ethernet, a quantity of physical lanes varies based on different implementations.
(3) K1/K2 bit block: The K1/K2 bit block is a code block that includes K2 bits and that is obtained by encoding K1 payload bits, where the K2 bits include the K1 payload bits and K2-K1 synchronization bits. The K1/K2 bit block includes but is not limited to any one of an 8B/10B encoded code block, a 64B/66B encoded code block, a 128B/130B encoded code block, or a 256B/257B encoded code block. A code block that meets a rule of the K1/K2 bit block and that appears in the future is also referred to as a K1/K2 bit block. A K1/K2 bit block stream is transmitted over an Ethernet physical layer link. For example, in a 1G standard Ethernet, an 8B/10B encoded code block stream is transmitted over the physical layer link. In a 10G/40G/100G standard Ethernet, a 64B/66B encoded code block stream is transmitted over the physical layer link.

With the development of communication technologies and computer technologies, optical modules and graphics processing units (graphics processing units, GPUs) can be used to construct an artificial intelligence (artificial intelligence, AI) foundation model. In the AI foundation model, the GPUs are connected to the optical modules, and two optical modules are connected through an optical fiber, to implement a connection between a plurality of GPUs. The plurality of GPUs included in the AI foundation model are referred to as a GPU cluster, and communication between the plurality of GPUs may be implemented based on an Ethernet technology. In the AI foundation model, network availability is affected by network stability. For example, when a single GPU is faulty, a GPU connected to the GPU is affected. When an optical module is faulty, a GPU connected to the optical module is generally affected, and a GPU connected to the affected GPU is also affected.

For example, the following four types of problems cause an instantaneous fault or a permanent fault of the optical module:
(1) a clock problem, for example, a clock deviation caused by at least one of a configuration or a crystal frequency offset;
(2) at least one of a laser fault or an electrical chip fault in the optical module;
(3) contamination on an end surface of an optical interface; and
(4) an optical fiber fault, for example, a broken optical fiber or a loosened connector between the optical interface and the optical fiber.

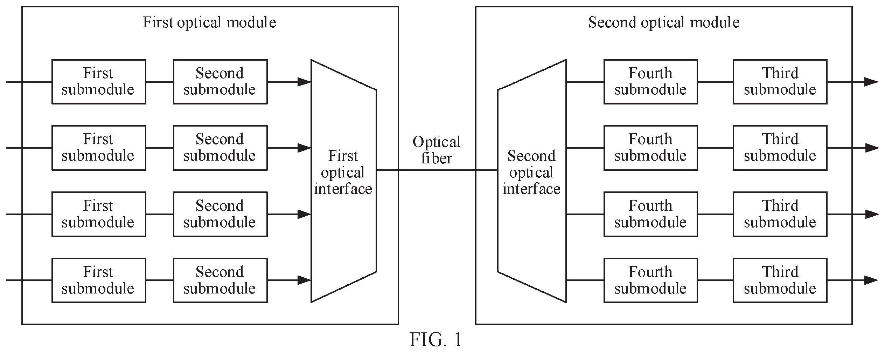

FIG. 1 is a diagram of a structure of an optical module according to an embodiment of this application. As shown in FIG. 1, a first optical module and a second optical module are connected through an optical fiber. The optical fiber is used to implement four lanes, and the four lanes are used to implement a transmission rate of 400G. The transmission rate of 400G may be a data transmission rate of 400 gigabits per second (gigabits per second, Gbps).

The first optical module includes a first submodule, a second submodule, and a first optical interface. The first submodule includes a clock and data recovery (clock and data recovery, CDR) circuit and an optical digital signal processor (optical digital signal processor, oDSP) that correspond to each lane. The second submodule includes a driver (driver) and a laser (laser), where the laser may also be referred to as an electrical chip. The second optical module includes a third submodule, a fourth submodule, and a second optical interface. The third submodule includes a CDR circuit and an oDSP that correspond to each lane. The fourth submodule includes a diode (pin) and a trans-impedance amplifier (trans-impedance amplifier, TIA). For example, the first submodule and the third submodule are prone to a clock problem, and the second submodule and the fourth submodule are prone to at least one of a laser fault or an electrical chip fault. The first optical interface and the second optical interface are prone to contamination on end surfaces, and the optical fiber is prone to an optical fiber fault.

For example, a physical layer link in the IEEE 802.3 standard is represented as a path between optical modules during physical implementation. When an optical module is faulty, the physical layer link implemented based on a path between two optical modules is interrupted. When the fault is an instantaneous fault, the physical layer link can be re-established after the fault is rectified. In addition, in terms of a protocol layer, the optical module works at a PMA sublayer or a physical medium dependent (physical medium dependent, PMD) sublayer.

For example, the physical layer link is implemented based on a physical lane and a virtual lane, so that data transmitted between two optical modules is transmitted through the physical lane and the virtual lane. One physical lane may correspond to a plurality of virtual lanes, and there may be a plurality of physical lanes and a plurality of virtual lanes. Using the virtual lane as an example, when a transmission rate of a path between two optical modules is 400G, the transmission rate of 400G is implemented by eight virtual lanes each with a transmission rate of 50G, or is implemented by four virtual lanes each with a transmission rate of 100G.

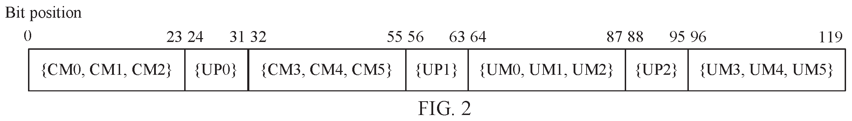

When data is transmitted through a plurality of virtual lanes, to ensure that a receive end can be aligned with the plurality of virtual lanes, the IEEE 802.3 standard proposes an alignment marker (alignment marker, AM). FIG. 2 is a diagram of a structure of an AM according to an embodiment of this application. As shown in FIG. 2, the AM includes a common marker (common marker, CM) field, a unique marker (unique marker, UM) field, and a unique pad (unique pad, UP) field. The CM field includes a CM0 to a CM5, and the CM0 to the CM5 are common identifiers of all virtual lanes. The UM field includes a UM1 to a UM5, and one group of values of the UM0 to the UM5 uniquely identify one virtual lane. The UP field includes a UP0 to a UP2, and one group of values of the UP0 to the UP2 may uniquely identify one virtual lane, or values of the UP0 to the UP2 are padding data that is set based on experience or an actual requirement. Bit positions of the CM0 to the CM2, the UP0, the CM3 to the CM5, the UP1, the UM0 to the UM2, the UP2, and the UM3 to the UM5 may be shown in FIG. 2. Using eight virtual lanes of a 200G Ethernet as an example, AMs corresponding to the virtual lanes may be shown in Table 1, and the eight virtual lanes are numbered from 0 to 7.

**Table 1**

| Sequence number | 0 | 1 | 2 | 3 | 4 | 5 | 6 | 7 |
|---|---|---|---|---|---|---|---|---|
| CM0 | 0x9A | 0x9A | 0x9A | 0x9A | 0x9A | 0x9A | 0x9A | 0x9A |
| CM1 | 0x4A | 0x4A | 0x4A | 0x4A | 0x4A | 0x4A | 0x4A | 0x4A |
| CM2 | 0x26 | 0x26 | 0x26 | 0x26 | 0x26 | 0x26 | 0x26 | 0x26 |
| UP0 | 0x05 | 0x04 | 0x46 | 0x5A | 0xE1 | 0xF2 | 0x3D | 0x22 |
| CM3 | 0x65 | 0x65 | 0x65 | 0x65 | 0x65 | 0x65 | 0x65 | 0x65 |
| CM4 | 0xB5 | 0xB5 | 0xB5 | 0xB5 | 0xB5 | 0xB5 | 0xB5 | 0xB5 |
| CM5 | 0xD9 | 0xD9 | 0xD9 | 0xD9 | 0xD9 | 0xD9 | 0xD9 | 0xD9 |
| UP1 | 0xD6 | 0x67 | 0xFE | 0x84 | 0x19 | 0x4E | 0xEE | 0x32 |
| UM0 | 0xB3 | 0x5A | 0x3E | 0x86 | 0x2A | 0x12 | 0x42 | 0xD6 |
| UM1 | 0xC0 | 0xDE | 0xF3 | 0x80 | 0x51 | 0x4F | 0x9C | 0x76 |
| UM2 | 0x8C | 0x7E | 0x56 | 0xD0 | 0xF2 | 0xD1 | 0xA1 | 0x5B |
| UP2 | 0x29 | 0x98 | 0x01 | 0x7B | 0xE6 | 0xB1 | 0x11 | 0xCD |
| UM3 | 0x4C | 0xA5 | 0xC1 | 0x79 | 0xD5 | 0xED | 0xBD | 0x29 |
| UM4 | 0x3F | 0x21 | 0x0C | 0x7F | 0xAE | 0xB0 | 0x63 | 0x89 |
| UM5 | 0x73 | 0x81 | 0xA9 | 0x2F | 0x0D | 0x2E | 0x5E | 0xA4 |

As shown in Table 1, values of the CM fields in the AMs corresponding to the eight virtual lanes are the same, values of the UM fields are all different, and values of the UP fields are all different. When the AMs shown in Table 1 is used, for any virtual lane in the plurality of virtual lanes, if the receive end obtains an AM, and values of the CM field and the UM field that are included in the AM respectively match values of the CM field and the UM field that correspond to the any virtual lane and that are shown in Table 1, the receive end can lock the any virtual lane, to obtain a number of the any virtual lane. For a process in which the receive end locks the any virtual lane, refer to related content of AM locking in the IEEE 802.3 standard, and details are not described herein again. For example, when a virtual lane is locked, the virtual lane may be referred to as being in an AM locked state, or referred to as that an AM of the virtual lane is locked.

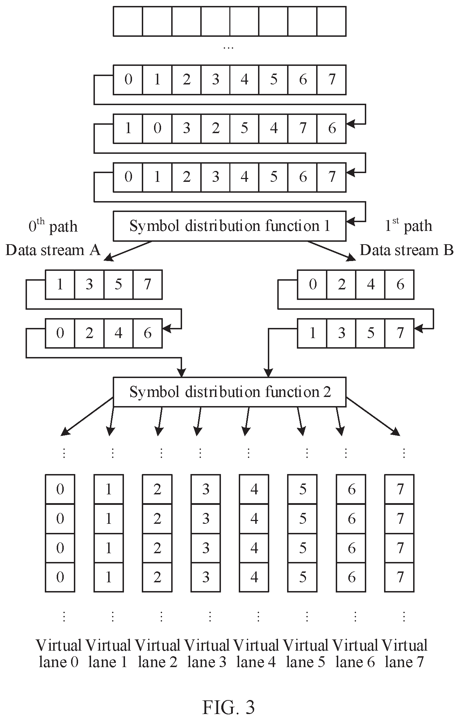

To ensure that the receive end can implement AM locking to be aligned with the plurality of virtual lanes, a transmit end inserts, at an interval of a specific period, an AM corresponding to each virtual lane into the virtual lane. For example, for a data processing procedure of a 200G/400G Ethernet, there are two symbol distribution functions (symbol distribution function) in a process of distributing a serial code block stream to a plurality of virtual lanes, where the serial code block stream is obtained by encoding service data. The Ethernet may be either a standard Ethernet or a flexible Ethernet (flexible ethernet, FlexE). FIG. 3 is a diagram of a code block stream distribution process according to an embodiment of this application. In FIG. 3, for example, a 200G Ethernet scenario and a plurality of code blocks included in a code block stream being all code blocks obtained through Reed-Solomon forward error correction (Reed-Solomon forward error correction, RS-FEC) encoding are used. Each code block included in the code block stream includes a plurality of symbols, and a quantity of bits included in each symbol is determined based on a code pattern used for RS-FEC encoding.

As shown in FIG. 3, a serial code block stream is first distributed according to a symbol distribution function 1. That is, one symbol is first distributed to the 0^{th} path, and then one symbol is distributed to the 1^{st} path, and so on. In FIG. 3, a distribution rule of the symbol distribution function 1 is represented by 0, 1, 0, 1, 0, 1, and so on. After the distribution according to the symbol distribution function 1, a data stream A and a data stream B that are parallel are formed. For example, one square in FIG. 3 represents one symbol, and symbols with a same reference numeral are subsequently distributed to a same virtual lane.

After the data stream A and the data stream B are obtained, the data stream A and the data stream B are distributed according to a symbol distribution function 2. That is, the 0^{th} symbol of the data stream A is distributed to a virtual lane 0, the 0^{th} symbol of the data stream B is distributed to a virtual lane 1, the 1^{st} symbol of the data stream A is distributed to a virtual lane 2, the 1^{st} symbol of the data stream B is distributed to a virtual lane 3, the 2^{nd} symbol of the data stream A is distributed to a virtual lane 4, the 2^{nd} symbol of the data stream B is distributed to a virtual lane 5, the 3^{rd} symbol of the data stream A is distributed to a virtual lane 6, and the 4^{th} symbol of the data stream B is distributed to a virtual lane 7. This distribution rule is represented by 0, 1, 0, 1, 0, 1, 0, 1, and is denoted as a distribution rule 1. Next, symbols of the data stream A and the data stream B are distributed according to a distribution rule of 1, 0, 1, 0, 1, 0, 1, 0, which is denoted as a distribution rule 2. Then, the symbols of the data stream A and the data stream B are distributed according to the distribution rule 1. In other words, in the symbol distribution function 2, the distribution rule 1 and the distribution rule 2 are alternately used. In FIG. 3, a 200G Ethernet is used as an example for description. For a data processing procedure corresponding to another transmission rate, refer to a related processing procedure in the IEEE 802.3 standard. Details are not described herein again.

For example, when an optical module is faulty, one or more optical lanes related to the optical module are faulty, and consequently, a physical lane or a virtual lane implemented based on the optical lane is faulty. In the IEEE 802.3 standard, when a fault occurs on any virtual lane or physical lane, an AM locking phase in a PCS on a receive side detects the lane fault. According to a lane fault handling procedure in the IEEE 802.3 standard, all physical links between two optical modules are unavailable, leading to low availability of the optical modules. An AI foundation model including 4096 pairs of optical modules is used as an example. If the AI foundation model is implemented based on a standard Ethernet technology or a flexible Ethernet technology, fault rates in different fault cases may be shown in Table 2. In addition, when a single-lane fault can be handled, an average fault time interval of the AI foundation model is also shown in Table 2. The average fault time interval is also referred to as mean time between failures (mean time between failures, MTBF).

**Table 2**

| Fault case | Standard Ethernet | Flexible Ethernet |
|---|---|---|
| Fault rate of a single lane | 5.00000e-07 | 5.00000e-07 |
| Fault rate of a single optical module | 2.00000e-06 | 1.50000e-12 |
| Fault rate of a pair of optical modules | 3.99999e-06 | 3.00004e-12 |
| Fault rate of 4096 pairs of optical modules | 1.62505e-02 | 1.22882e-08 |
| Average fault time (hours) | 6.15365e+01 | 8.13790e+07 |

As shown in Table 2, when the AI foundation model is implemented based on the standard Ethernet technology, the average fault time interval is about 61.5 hours. When the AI foundation model is implemented based on the flexible Ethernet technology, the average fault time interval is about 8.14e+07 hours, that is, about 10 years. In other words, when a single-lane fault can be handled, the average fault time interval can be long, so that reliability of the AI foundation model is high.

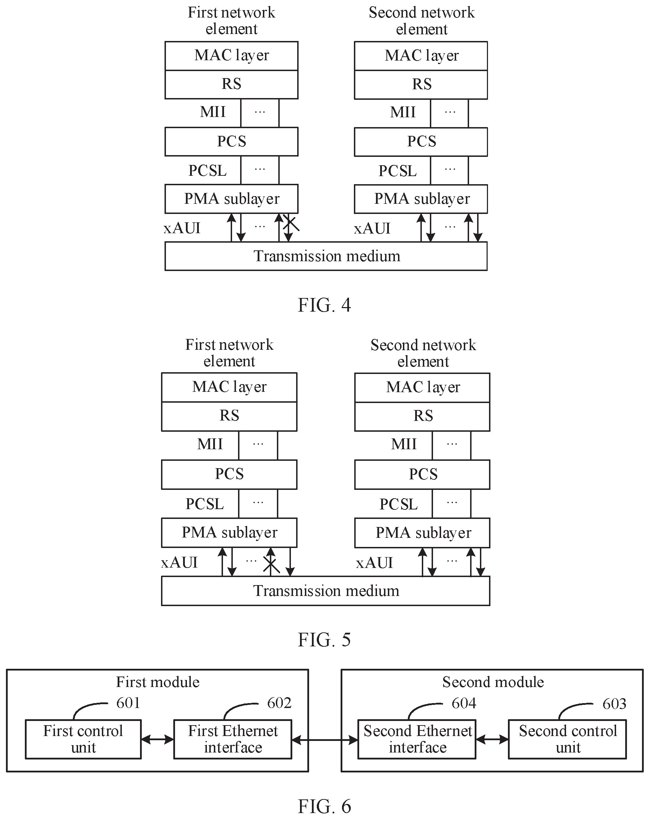

FIG. 4 is a diagram of a lane fault according to an embodiment of this application. Refer to FIG. 4. Both sides of data transmission include a medium access control (medium access control, MAC) layer, a reconciliation sublayer (reconciliation sublayer, RS), a PCS, a PMA sublayer, and a transmission medium, where a media independent interface (media independent interface, MII) exists between the RS and the PCS, a PCS lane (PCS lane, PCSL) exists between the PCS and the PMA sublayer, and an attachment unit interface (attachment unit interface, AUI) exists between the PMA sublayer and the transmission medium. xAUI represents any available AUI, and the transmission medium includes but is not limited to either an optical fiber or a copper wire. For example, the two sides of the data transmission are a first network element and a second network element respectively, and a physical lane used for sending data in the first network element is faulty. When the physical lane is faulty, the second network element detects a locking loss alarm at the PCS, for example, detects that an AM is unlocked at the PCS, and inserts a local fault (local fault, LF) alarm code block. Then, after detecting the LF alarm code block at the RS, the second network element sets a link down (link down), and inserts back a remote fault (remote fault, RF) alarm code block. Then, after detecting the RF alarm code block at the RS, the first network element sets a link down, and inserts back an idle (idle) code block.

FIG. 5 is a diagram of another lane fault according to an embodiment of this application. Refer to FIG. 5. Both sides of data transmission include a MAC layer, an RS, a PCS, a PMA sublayer, and a transmission medium, where an MII exists between the RS and the PCS, a PCSL exists between the PCS and the PMA sublayer, and an xAUI exists between the PMA sublayer and the transmission medium. For example, the two sides of the data transmission are a first network element and a second network element respectively, and a physical lane used for receiving data in the first network element is faulty. When the physical lane is faulty, the first network element detects a locking loss alarm at the PCS, for example, detects at least one of the following: a bit error rate of a code block is greater than a reference threshold or an AM is unlocked at the PCS, and inserts an LF alarm code block. Then, after detecting the LF alarm code block at the RS, the first network element sets a link down, and inserts back an RF alarm code block. Then, after detecting the RF alarm code block at the RS, the second network element sets a link down, and inserts back an idle code block. With reference to FIG. 4 and FIG. 5, it can be learned that, when one lane is faulty, if the entire link is set to be unavailable, utilization of the link is low.

An embodiment of this application provides a code block transmission method, so that when some of a plurality of lanes are faulty, a code block is stopped from being transmitted through the faulty lanes, and the code block continues to be transmitted through lanes that are not faulty, thereby improving lane utilization and reliability. FIG. 6 is a diagram of an implementation environment according to an embodiment of this application. The method may be applied to the implementation environment shown in FIG. 6. As shown in FIG. 6, the implementation environment includes a first control unit 601, a first Ethernet interface 602, a second control unit 603, and a second Ethernet interface 604. The first control unit 601 is connected to the first Ethernet interface 602, the second control unit 603 is connected to the second Ethernet interface 604, and the first Ethernet interface 602 is connected to the second Ethernet interface 604. For example, the first control unit 601 and the first Ethernet interface 602 are located in a first module, the second control unit 603 and the second Ethernet interface 604 are located in a second module, and the first module and the second module may be located in a same device or different devices. This is not limited in embodiments of this application.

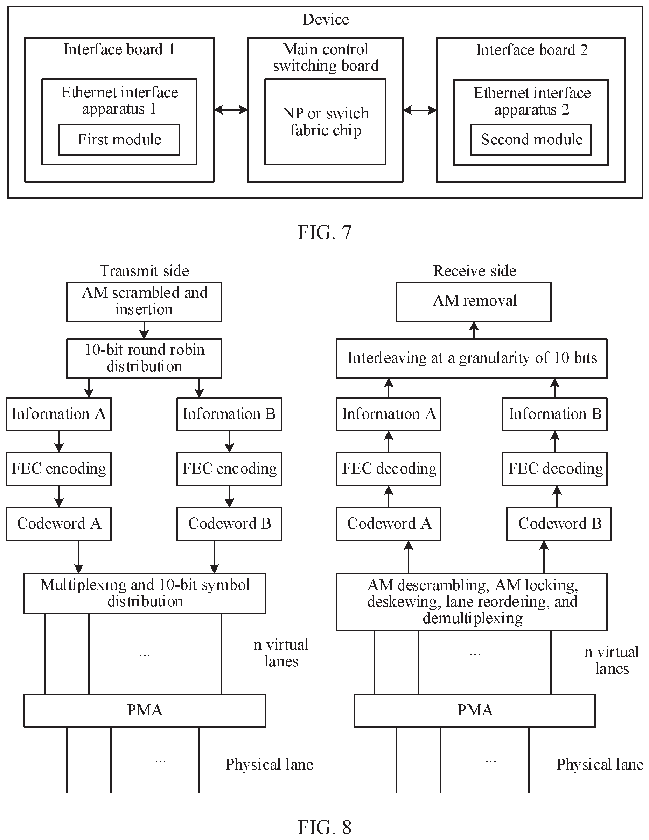

For example, both the first module and the second module are located in a network device that supports an Ethernet interface, and the network device includes but is not limited to at least one of a router, a box switch, or a chassis switch. In some embodiments, either the first module or the second module may be located in an Ethernet service interface line card MAC/physical layer (physical layer, PHY) chip of the device, or located in a field programmable gate array (field programmable gate array, FPGA). FIG. 7 is a diagram of another implementation environment according to an embodiment of this application. As shown in FIG. 7, a device includes an interface board 1, an interface board 2, and a main control switching board, where the interface board 1 and the interface board 2 are separately connected to the main control switching board. The interface board 1 includes an Ethernet interface apparatus 1, the interface board 2 includes an Ethernet interface apparatus 2, and the main control switching board includes a network processor (network processor, NP) or a switch fabric chip. The Ethernet interface apparatus 1 includes a first module, and the Ethernet interface apparatus 2 includes a second module.

FIG. 8 is a diagram of a system architecture according to an embodiment of this application. As shown in FIG. 8, operations performed by a transmit side include but are not limited to: AM scrambled and insertion (AM scrambled and insertion), 10-bit round robin distribution (10-bit round robin distribution) to obtain information (message) A and information B, FEC encoding on the information A to obtain a codeword (codeword) A, FEC encoding on the information B to obtain a codeword B, and multiplexing and 10-bit symbol distribution (mux and 10-bit symbol distribution). As shown in FIG. 8, symbols are distributed to n virtual lanes, and the symbols transmitted through the n virtual lanes are transmitted through a plurality of physical lanes after passing through PMA, where n is a positive integer greater than 1. For example, the first control unit 601 and the first Ethernet interface 602 are applied to the system architecture on the transmit side, and the code block transmission method provided in embodiments of this application may be applied to the phase of performing multiplexing and 10-bit symbol distribution on the transmit side.

Still refer to FIG. 8. Operations performed by a receive side include but are not limited to: receiving a plurality of symbols transmitted through a plurality of physical lanes, where the symbols received through the plurality of physical lanes are input into n virtual lanes after passing through PMA, performing AM descrambling (descramble), AM locking (lock), deskewing (deskew), lane reordering (lane reorder), and demultiplexing (demux) on the plurality of symbols transmitted through the n virtual lanes to obtain a codeword A and a codeword B, performing FEC decoding on the codeword A to obtain information A, performing FEC decoding on the codeword B to obtain information B, performing interleaving (interleave) on the information A and the information B at a granularity of 10 bits, and removing an AM. For example, the second control unit 603 and the second Ethernet interface 604 are applied to the system architecture on the receive side, and the code block transmission method provided in embodiments of this application may be applied to the phase of performing AM descrambling, AM locking, deskewing, lane reordering, and demultiplexing on the plurality of symbols transmitted through the n virtual lanes on the receive side.

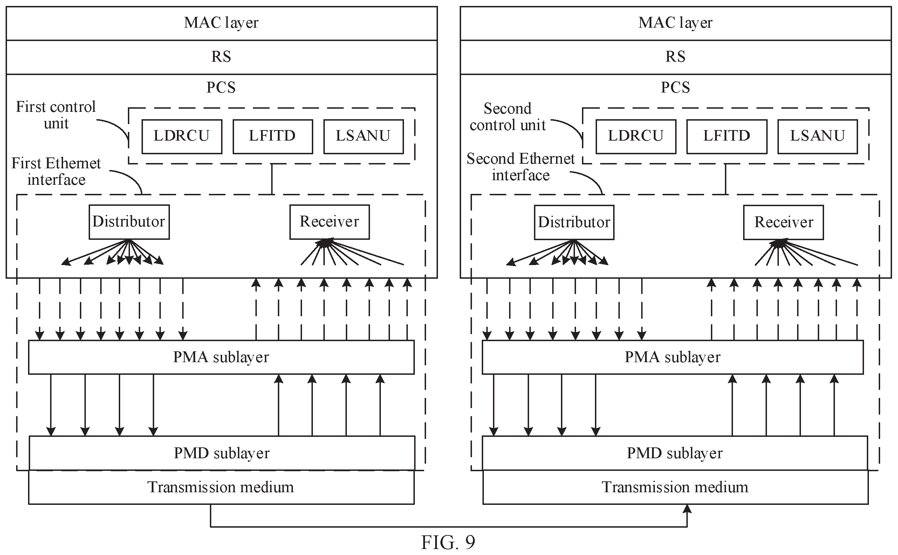

With reference to FIG. 8, the code block transmission method provided in embodiments of this application may be applied to a PCS. FIG. 9 is a diagram of a structure of a first module and a second module according to an embodiment of this application. As shown in FIG. 9, the first module includes a first control unit and a first Ethernet interface. The first control unit is configured to: control, on a data transmission path, a lane to which a code block is distributed, control, on a data receiving path, a lane from which a code block is received, and detect, notify, and manage a status of each lane. The first Ethernet interface includes but is not limited to a distributor and a receiver, where the distributor is configured to distribute a code block to a virtual lane, and the receiver is configured to receive the code block from the virtual lane. The second module includes a second control unit and a second Ethernet interface. The second control unit is configured to: control, on a data transmission path, a lane to which a code block is distributed, control, on a data receiving path, a lane from which a code block is received, and detect, notify, and manage a status of each lane. The second Ethernet interface includes but is not limited to a distributor and a receiver, where the distributor is configured to distribute a code block to a virtual lane, and the receiver is configured to receive the code block from the virtual lane. Both the first control unit and the second control unit may be referred to as lane control units (lane control units, LCTUs). As shown in FIG. 9, the first module and the second module may be used in an Ethernet architecture in the IEEE 802.3 standard. In other words, as shown in FIG. 9, an architecture including the first module and an architecture including the second module each include a MAC layer, an RS, a PCS, a PMA sublayer, a PMD sublayer, and a medium (medium).

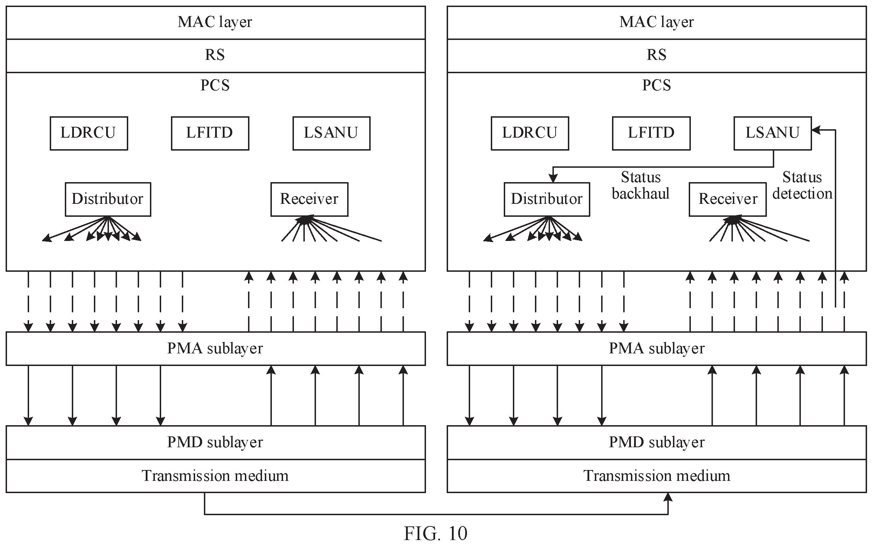

For example, the LCTU includes a plurality of subunits, and functions of the LCTU are implemented by the plurality of subunits. Still refer to FIG. 9. The LCTU includes a lane status acquire and notification unit (lane status acquire and notification unit, LSANU), a lane distribution and receive control unit (lane distribution and receive control unit, LDRCU), and a lane fault information transmission and detect unit (lane fault information transmission and detect unit, LFITD). FIG. 10 is a diagram of a function of an LSANU according to an embodiment of this application. As shown in FIG. 10, the function of the LSANU includes status detection and status backhaul. The status detection includes: obtaining a lane status based on at least one of a status of a physical lane, an unlocked state of a virtual lane, or a bit error situation of a code block; or obtaining a lane status based on received faulty lane indication information. The status backhaul includes: sending faulty lane indication information.

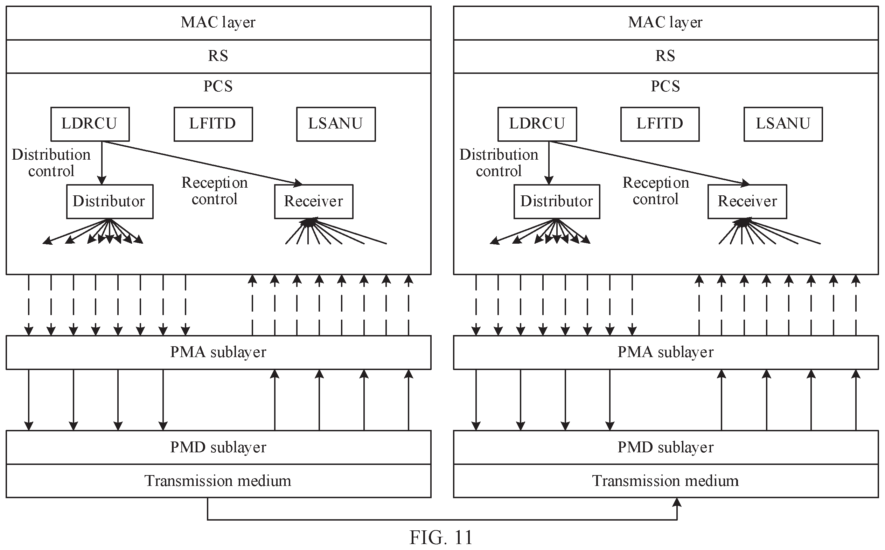

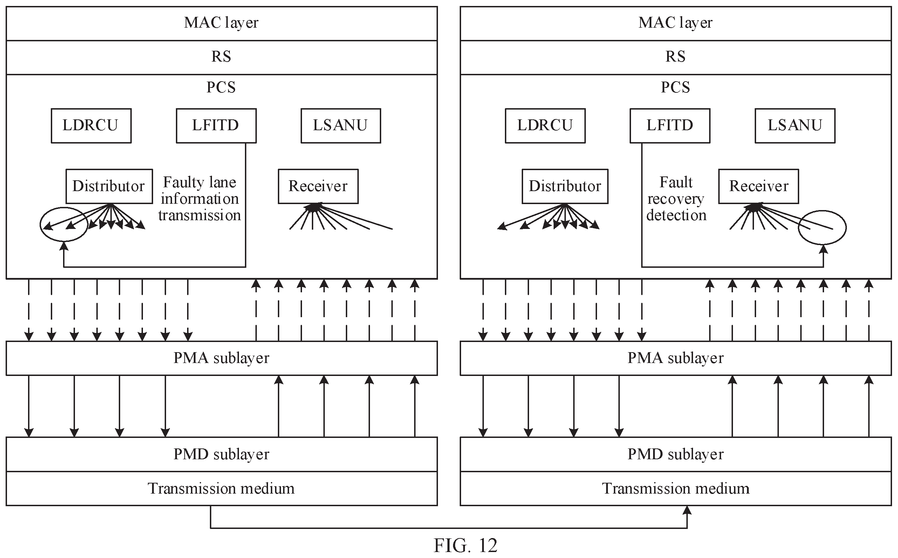

FIG. 11 is a diagram of a function of an LDRCU according to an embodiment of this application. As shown in FIG. 11, the function of the LDRCU includes distribution control and reception control. The distribution control includes: controlling, based on a lane status obtained by the LSANU, a lane to which data is distributed. The reception control includes: controlling, based on a lane status obtained by the LSANU, a lane from which data is received. FIG. 12 is a diagram of a function of an LFITD according to an embodiment of this application. As shown in FIG. 12, the function of the LFITD includes faulty lane information transmission and fault recovery detection. The faulty lane information transmission includes: sending a maintenance code block stream to a faulty lane, where the maintenance code block stream is used to maintain a transmission rate of the lane. The fault recovery detection includes: determining, by detecting the maintenance code block stream, whether the faulty lane returns to normal. For example, when sending the maintenance code stream, the LFITD controls the distributor to send the maintenance code block stream, and when detecting the maintenance code block stream, the LFITD obtains the maintenance code block stream from the receiver.

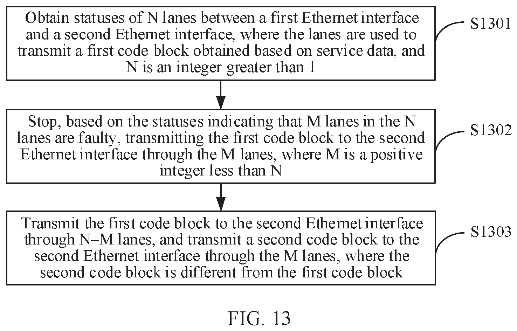

The code block transmission method provided in embodiments of this application may be shown in FIG. 13. The following describes the method with reference to the implementation environment shown in FIG. 6. The method may be applied to the first control unit 601 shown in FIG. 6, and the first control unit 601 is connected to the first Ethernet interface 602. As shown in FIG. 13, the method includes but is not limited to S1301 to S1303.

S1301. Obtain statuses of N lanes between the first Ethernet interface and the second Ethernet interface, where the lanes are used to transmit a first code block obtained based on service data, and N is an integer greater than 1.

For example, the lane between the first Ethernet interface and the second Ethernet interface includes but is not limited to at least one of a physical lane or a virtual lane. The physical lane includes a PMA sublayer lane, and the virtual lane includes at least one of a PCS lane or an FEC lane. When there are a plurality of first code blocks, the plurality of first code blocks may be referred to as a first code block stream. For example, in this embodiment of this application, one physical lane includes a physical lane used by the first Ethernet interface to transmit a code block to the second Ethernet interface and a physical lane used by the second Ethernet interface to transmit a code block to the first Ethernet interface, and one virtual lane includes a virtual lane used by the first Ethernet interface to transmit a code block to the second Ethernet interface and a virtual lane used by the second Ethernet interface to transmit a code block to the first Ethernet interface.

In a possible implementation, obtaining the statuses of the N lanes between the first Ethernet interface and the second Ethernet interface includes: for any lane in the N lanes, receiving, through the any lane, faulty lane indication information of the any lane transmitted by the second Ethernet interface, where the faulty lane indication information indicates a status of the any lane. In other words, the first control unit determines the status of the lane based on the obtained faulty lane indication information. In some embodiments, the second Ethernet interface is connected to the second control unit. For any lane in the N lanes, the faulty lane indication information of the any lane is obtained by the second control unit based on at least one of a bit error rate of the first code block transmitted through the any lane or a locking situation of an AM of the any lane. For a manner in which the second control unit obtains the faulty lane indication information, refer to content of S1801 below. Details are not described herein.

For example, when the first control unit and the second control unit are connected to a reference apparatus, the reference apparatus may receive faulty lane indication information of the N lanes sent by the second control unit, and then send the N pieces of faulty lane indication information to the first control unit. Therefore, the first control unit can receive the faulty lane indication information of the N lanes. For example, a computer program runs on the reference apparatus, and when the computer program is run, the reference apparatus performs operations of receiving the faulty lane indication information and sending the faulty lane indication information.

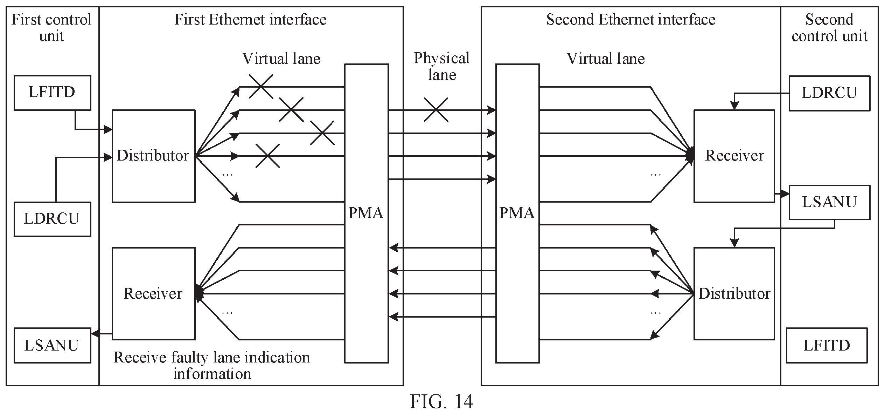

FIG. 14 is a diagram of a code block transmission process according to an embodiment of this application. In FIG. 14, a 100G Ethernet scenario is used as an example. The scenario includes four optical lanes, one optical lane corresponds to one physical lane, and one physical lane corresponds to four virtual lanes. As shown in FIG. 14, one physical lane is faulty, the physical lane corresponds to four virtual lanes, and a number of the physical lane is 0. When the LSANU of the first control unit receives faulty lane indication information, and the faulty lane indication information indicates that the 0^{th} physical lane is faulty, it is determined that the 0^{th} physical lane and the four virtual lanes corresponding to the 0^{th} physical lane are faulty.

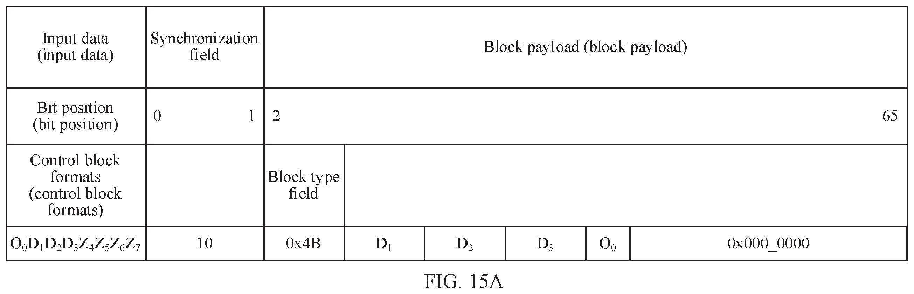

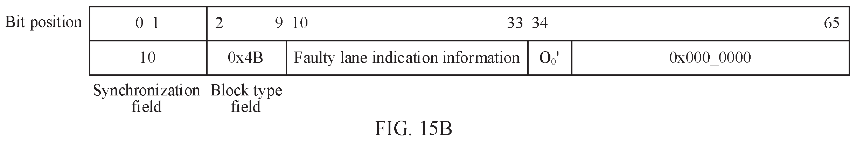

In a possible implementation, receiving the faulty lane indication information of the any lane transmitted through the any lane by the second Ethernet interface includes: receiving a second reference code block through the any lane, where the second reference code block includes the faulty lane indication information. For example, the second reference code block is obtained based on an O code block in the IEEE 802.3 standard. FIG. 15A and FIG. 15B are diagrams of a structure of a second reference code block according to an embodiment of this application. FIG. 15A is the O code block in the IEEE 802.3 standard, and FIG. 15B is the second reference code block obtained based on the O code block. In FIG. 15B, a value of O₀ is reset to O₀', and a value of O₀' indicates that the code block is the second reference code block. A specific value of O₀' may be set based on experience or an actual requirement. This is not limited in embodiments of this application. On the basis that a new value is set for O₀, the faulty lane indication information is carried by using N bits in the 33^{rd} bit position to the 10^{th} bit position, where one bit corresponds to one lane. In other words, bit positions of D₁ to D₃ in the O code block are extended, so that the N bits in the bit positions of D₁ to D₃ can carry the faulty lane indication information. Specific positions of the N bits in the 33^{rd} bit position to the 10^{th} bit position may be set based on experience or an actual requirement. This is not limited in embodiments of this application. For content of other bit positions of the O code block and the second reference code block, refer to related content in the IEEE 802.3 standard. Details are not described herein again.

In some embodiments, the second reference code block is obtained based on an AM in the IEEE 802.3 standard. For example, the second reference code block may be obtained by extending a value of a UP field in the AM, so that the UP field carries the faulty lane indication information. In other words, the second reference code block includes the UP field, and the UP field includes the faulty lane indication information.

In some other embodiments, the second reference code block is obtained by extending a padding bit (padding bit) used to form a plurality of 257-bit code blocks with an AM. For example, the second reference code block is used to form a plurality of 257-bit code blocks with the AM, and the second reference code block includes a type field and a status field. The type field indicates that the second reference code block is a code block including the faulty lane indication information, and the status field includes the faulty lane indication information. Therefore, types of the second reference code block are diversified and flexible.

For example, when the second reference code block includes the type field and the status field, a value of the type field is a first value, indicating that the second reference code block includes the faulty lane indication information. The first value may be set based on experience or an actual requirement. This is not limited in embodiments of this application. The status field includes the faulty lane indication information, that is, the status field indicates a status of a lane. For example, the status field includes at least one bit, a reference quantity of bits in the at least one bit correspond to at least one lane, and the reference quantity is less than or equal to a quantity of bits included in the status field. For any bit in the reference quantity of bits, the any bit corresponds to at least one lane, and a value of the any bit indicates a status of at least one virtual lane corresponding to the any bit. For example, when the type field is the first value, a status of the virtual lane includes whether a fault occurs.

In a possible implementation, the method further includes: receiving, by the first control unit through the first Ethernet interface, performance deterioration information transmitted by the second control unit through each lane in the N lanes, where the performance deterioration information indicates a performance deterioration situation of the lane. For example, the first control unit receives, through the first Ethernet interface, a third reference code block transmitted by the second control unit, where the third reference code block includes the performance deterioration information. The performance deterioration information includes but is not limited to a bit error rate being higher than a reference threshold. The third reference code block may also be obtained by extending the padding bit used to form a plurality of 257-bit code blocks with the AM. For example, the third reference code block includes a type field and a status field. The type field indicates that the third reference code block includes the performance deterioration information. For example, a value of the type field is a second value, indicating that the third reference code block includes the performance deterioration information, where the second value is different from the first value. The second value may be set based on experience or an actual requirement. This is not limited in embodiments of this application. The status field indicates a status of a lane. For example, the status field includes at least one bit, a reference quantity of bits in the at least one bit correspond to at least one lane, and the reference quantity is less than or equal to a quantity of bits included in the status field. For any bit in the reference quantity of bits, the any bit corresponds to at least one lane, and a value of the any bit indicates a status of at least one virtual lane corresponding to the any bit. For example, when the type field is the second value, the status of the lane includes whether performance deteriorates. For example, if a bit error rate of a code block transmitted through a lane is greater than the reference threshold, performance of the lane deteriorates; or if a bit error rate of a code block transmitted through a lane is not greater than the reference threshold, performance of the lane does not deteriorate.

The performance deterioration information is transmitted, so that when a lane is faulty, a fault type of the lane can be determined based on the performance deterioration information. For example, for a faulty lane, if the performance deterioration information indicates that performance of the lane deteriorates, it can be determined that the fault type is performance deterioration; or if the performance deterioration information indicates that performance of the lane does not deteriorate, it can be determined that the fault type is AM unlocking. For example, the second reference code block and the third reference code block may be alternately sent through a same lane, so that when a fault occurs on the lane, time from occurrence of the fault to reception of the third reference code block can be short, and time for determining the fault type based on the third reference code block is short.

The following uses the second reference code block as an example to describe a relationship between the second reference code block and the AM and a correspondence between the bit included in the status field and the virtual lane.

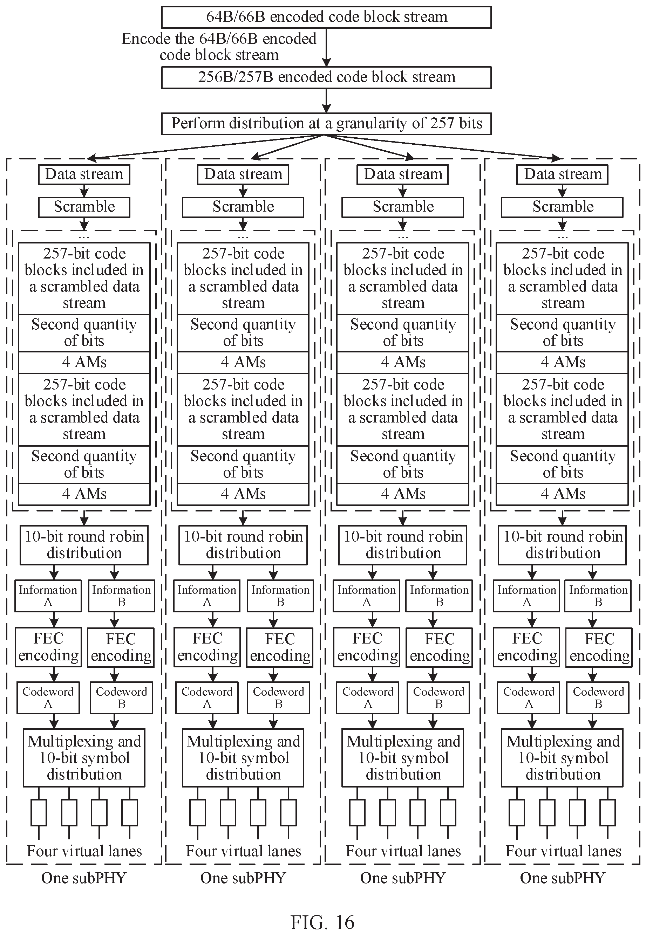

In a possible implementation, a system architecture of an Ethernet may be divided into a plurality of sub-physical layers (sub-physical layers, subPHYs), and one subPHY is configured to perform a round of operations of AM insertion, round robin distribution, FEC encoding, and multiplexing and symbol distribution. FIG. 16 is a diagram of a 400G Ethernet architecture according to an embodiment of this application. As shown in FIG. 16, a 64B/66B encoded code block stream is encoded as a 256B/257B encoded code block stream, and the 256B/257B encoded code block stream is distributed into four parallel data streams at a granularity of 257 bits. Each data stream includes a plurality of 257-bit code blocks, a transmission rate of each data stream is 100G, and a system architecture corresponding to each data stream is referred to as one subPHY.

For any subPHY in the four subPHYs, a data stream located in the any subPHY is scrambled, and then an AM corresponding to a virtual lane located in the subPHY and a bit used to form a plurality of 257-bit code blocks with the AM are inserted into a scrambled data stream. As shown in FIG. 16, each subPHY corresponds to four virtual lanes, and the AM corresponding to each virtual lane is 120 bits. Four AMs and a second quantity of bits are inserted into the scrambled data stream at an interval of a length of a first quantity of FEC codewords, where the second quantity of bits are used to form a plurality of 257-bit code blocks with the four AMs. In other words, the second reference code block includes the second quantity of bits. The first quantity and the second quantity may be determined based on experience or an actual requirement. For example, the first quantity is 2048, and the second quantity is 34. Therefore, 34 bits are used to form two 257-bit code blocks with the four AMs. The length of the FEC codewords may be determined based on a type of subsequent FEC encoding.

Still refer to FIG. 16. For any subPHY, after the AMs and the second quantity of bits are inserted, the operations of performing 10-bit round robin distribution to obtain information A and information B, performing FEC encoding on the information A to obtain a codeword A, performing FEC encoding on the information B to obtain a codeword B, and performing multiplexing and 10-bit symbol distribution are performed. As shown in FIG. 16, for any subPHY, symbols are distributed to four virtual lanes. Therefore, in the 400G Ethernet, a total of 16 virtual lanes are used to transmit symbols. For example, for any subPHY, if the second control unit detects that at least one virtual lane corresponding to the any subPHY is faulty, the second control unit considers that the any subPHY is faulty. For content of determining, by the second control unit, whether the virtual lane is faulty, refer to related content of S1801 below. Details are not described herein.

For example, when the system architecture includes a plurality of subPHYs, for any subPHY in the plurality of subPHYs, a second reference code block transmitted in the any subPHY includes a second quantity of bits transmitted in the any subPHY. In other words, the second quantity of bits include a bit used as the type field and a bit used as the status field.

In a possible implementation, the status field includes one bit, the bit corresponds to all virtual lanes in the any subPHY, and a value of the bit indicates statuses of all the virtual lanes in the any subPHY. In this case, if at least one virtual lane in the any subPHY is faulty, it is considered that all the virtual lanes in the any subPHY are faulty. In another possible implementation, the status field includes a plurality of bits, and a reference quantity of bits in the plurality of bits correspond to a plurality of virtual lanes in the any subPHY. For any bit in the reference quantity of bits, the any bit corresponds to at least one virtual lane, and a value of the any bit indicates a status of the at least one virtual lane corresponding to the any bit.

In embodiments of this application, composition of the third reference code block is similar to that of the second reference code block. For example, the third reference code block includes the second quantity of bits. That is, the second quantity of bits include a bit used as the type field and a bit used as the status field. There are the following two differences between the third reference code block and the second reference code block: (1) Specific values of the type field are different. (2) When the specific values of the type field are different, the status of the virtual lane includes different content.

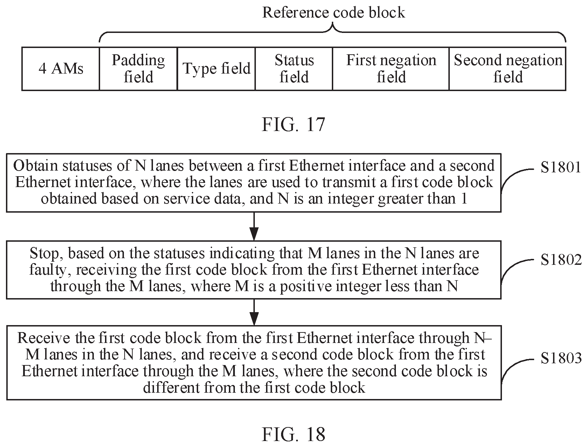

FIG. 17 is a diagram of an AM and a reference code block transmitted through one subPHY according to an embodiment of this application. The reference code block may be the second reference code block or the third reference code block. As shown in FIG. 17, the AM before the reference code block include four AMs corresponding to four virtual lanes, and there are 480 bits in total. The reference code block includes 34 bits, that is, the second quantity is equal to 34. The reference code block includes a type field and a status field, where the type field includes 2 bits, and the status field includes 8 bits. For example, when the first value is 1 and the second value is 2, if a value of the type field is 1, that is, values of the two bits of the type field are respectively 0 and 1, the reference code block is the second reference code block, and the second reference code block includes the faulty lane indication information. If a value of the type field is 2, that is, values of the two bits of the type field are respectively 1 and 0, the reference code block is the third reference code block, and the third reference code block includes the performance deterioration information.

In some embodiments, regardless of the second reference code block or the third reference code block, four bits in the eight bits of the status field indicate statuses of the four virtual lanes, where one bit corresponds to one virtual lane, and for any bit in the four bits, the any bit indicates a status of the virtual lane corresponding to the any bit. For example, the four bits indicating the statuses of the virtual lanes may be the first four bits or the last four bits in the eight bits, or the four bits indicating the statuses of the virtual lanes may be dispersedly distributed in the eight bits.

Using the second reference code block as an example, for the first bit in the four bits indicating the statuses of the virtual lanes, if the first bit is a third value, the status of the virtual lane corresponding to the first bit is normal; or if a value of the first bit is a fourth value, the status of the virtual lane corresponding to the first bit is faulty. Similarly, if the third bit in the four bits is the third value, the status of the virtual lane corresponding to the third bit is normal; or if a value of the third bit is the fourth value, the status of the virtual lane corresponding to the third bit is faulty. Similarly, if the second bit in the four bits is a fifth value, the status of the virtual lane corresponding to the second bit is normal; or if a value of the second bit is a sixth value, the status of the virtual lane corresponding to the second bit is faulty. Similarly, if the fourth bit in the four bits is the fifth value, the status of the virtual lane corresponding to the fourth bit is normal; or if a value of the fourth bit is the sixth value, the status of the virtual lane corresponding to the fourth bit is faulty. The third value to the sixth value may be set based on experience or an actual requirement. This is not limited in embodiments of this application. The third value is different from the fourth value, the fifth value is different from the sixth value, the third value may be the same as or different from the fifth value, and the fourth value may be the same as or different from the sixth value. For example, the third value is 1, the fourth value is 0, the fifth value is 0, and the sixth value is 1. Therefore, when none of the four lanes is faulty or all of the four lanes are faulty, 0 and 1 can be distributed alternately, and a direct current (direct current, DC) value of the status field is close to 0, that is, DC performance is balanced.

Using the third reference code block as an example, for the first bit in the four bits indicating the statuses of the virtual lanes, if the first bit is a seventh value, the status of the virtual lane corresponding to the first bit is that performance does not deteriorate; or if a value of the first bit is an eighth value, the status of the virtual lane corresponding to the first bit is that performance deteriorates. Similarly, if the third bit in the four bits is the seventh value, the status of the virtual lane corresponding to the third bit is that performance does not deteriorate; or if a value of the third bit is the eighth value, the status of the virtual lane corresponding to the third bit is that performance deteriorates. Similarly, if the second bit in the four bits is a ninth value, the status of the virtual lane corresponding to the second bit is that performance does not deteriorate; or if a value of the second bit is a tenth value, the status of the virtual lane corresponding to the second bit is that performance deteriorates. Similarly, if the fourth bit in the four bits is the ninth value, the status of the virtual lane corresponding to the fourth bit is that performance does not deteriorate; or if a value of the fourth bit is the tenth value, the status of the virtual lane corresponding to the fourth bit is that performance deteriorates. The seventh value to the tenth value may be set based on experience or an actual requirement. This is not limited in embodiments of this application. The seventh value is different from the eighth value, the ninth value is different from the tenth value, the seventh value may be the same as or different from the ninth value, and the eighth value may be the same as or different from the tenth value. For example, the seventh value is 1, the eighth value is 0, the ninth value is 0, and the tenth value is 1. Therefore, when performance of all the four lanes does not deteriorate or deteriorates, 0 and 1 can be distributed alternately, and DC performance of the status field is balanced.

In embodiments of this application, when a quantity of bits included in the status field is greater than a quantity of bits indicating the virtual lanes, a value of each bit other than the bits indicating the virtual lanes in the status field may be an eleventh value. The eleventh value may be set based on experience or an actual requirement. For example, the eleventh value is 0.

In some embodiments, the reference code block further includes a first negation field and a second negation field. For example, as shown in FIG. 17, the reference code block further includes the first negation field and the second negation field. The first negation field includes two bits, values of the two bits are obtained by negating the values of the two bits of the type field, the second negation field includes eight bits, and values of the eight bits are obtained by negating a value of the status field. The values of the bits of the first negation field are obtained by negating the values of the bits of the type field, and a value of the second negation field is obtained by negating the values of the bits of the status field, so that DC performance of the reference code block can be balanced. In some embodiments, the reference code block further includes a padding field. For example, as shown in FIG. 17, the reference code block further includes a 14-bit padding field. Therefore, the reference code block includes diversified and flexible content.

S1302. Stop, based on the statuses indicating that M lanes in the N lanes are faulty, transmitting the first code block to the second Ethernet interface through the M lanes, where M is a positive integer less than N.

In other words, for a faulty lane in the N lanes, the first code block obtained based on the service data is stopped from being transmitted through the lane. S1302 may correspond to an operation of controlling, by the LDRCU of the first control unit, the distributor not to distribute data to a faulty lane in FIG. 14. For example, the first control unit controls the distributor to stop distributing the first code block to the M faulty lanes in the N lanes.

S1303. Transmit the first code block to the second Ethernet interface through N-M lanes in the N lanes, and transmit a second code block to the second Ethernet interface through the M lanes, where the second code block is different from the first code block.

In other words, in a scenario in which some lanes in the N lanes are faulty, according to the method provided in embodiments of this application, when transmission of the first code block through lanes that are not faulty is kept, the first code block is stopped from being transmitted through the faulty lanes. For any faulty lane, the second code block is transmitted based on a transmission rate of the any lane. For example, a rate for transmitting the second code block is the same as a rate for transmitting the first code block, and the second code block is also referred to as a code block used to maintain a code block transmission rate. When there are a plurality of second code blocks, a code block stream including the plurality of second code blocks is the foregoing maintenance code block stream used to maintain a transmission rate of a lane. S1303 may correspond to an operation of sending, by the LFITD, a second code block to a faulty lane in FIG. 14. For example, the first control unit controls the distributor to distribute the first code block to the N-M lanes that are not faulty in the N lanes.

In a possible implementation, the second code block includes a code block obtained based on a PRBS. For example, the PRBS is divided based on a length of the first code block, to obtain at least one second code block. A type of the PRBS is not limited in embodiments of this application. For example, the PRBS is any one of a PRBS7, a PRBS9, a PRBS11, a PRBS15, or a PRBS32.

In another possible implementation, for any lane in the M lanes, the second code block transmitted through the any lane includes an AM corresponding to the any lane and a scrambled idle (idle) code block. For example, the scrambled idle code block is a scrambled idle test pattern (scrambled idle test pattern) generated by the PCS in the IEEE 802.3 standard.

In some embodiments, after transmitting the second code block to the second Ethernet interface through the M lanes, the method further includes: obtaining the statuses of the N lanes between the first Ethernet interface and the second Ethernet interface, and for any lane in the N lanes, performing, based on a change in the status of the any lane, an operation corresponding to a changed status on the any lane; or keeping performing, based on no change in the status of the any lane, an operation corresponding to the status.

For example, for any lane, if the status of the any lane changes from normal to faulty, an operation corresponding to faulty includes: stopping transmitting the first code block to the second Ethernet interface through the any lane, and transmitting the second code block to the second Ethernet interface through the any lane. If the status of the any lane changes from faulty to normal, an operation corresponding to normal includes: stopping transmitting the second code block to the second Ethernet interface through the any lane, and transmitting the first code block to the second Ethernet interface through the any lane. In other words, for a lane that has previously undergone a fault, if it is subsequently determined that the lane changes from faulty to normal, the first code block obtained based on the service data is re-transmitted through the lane.

In other words, after transmitting the first code block to the second Ethernet interface through the N-M lanes in the N lanes, and transmitting the second code block to the second Ethernet interface through the M lanes, the method may further include: obtaining, through K lanes in the M lanes, fault recovery indication information of the K lanes transmitted by the second Ethernet interface, where the fault recovery indication information of the K lanes indicates that the K lanes return to normal, and K is a positive integer less than or equal to M; and stopping, based on the fault recovery indication information of the K lanes, transmitting the second code block to the second Ethernet interface through the K lanes, and transmitting the first code block to the second Ethernet interface through the K lanes and the N-M lanes. The N-M lanes are the N-M lanes that are not faulty in the N lanes.

In a possible implementation, when the second code block includes the code block obtained based on the PRBS, the fault recovery indication information is obtained based on a PRBS feature identified for the second code block. In another possible implementation, when the second code block transmitted through the any lane includes the AM corresponding to the any lane and the scrambled idle code block, the fault recovery indication information is obtained based on the AM in the second code block being successfully locked. A specific form of the fault recovery indication information may be set based on experience or an actual requirement. This is not limited in embodiments of this application.

For example, when both the first control unit and the second control unit are connected to a reference apparatus, the reference apparatus may receive the fault recovery indication information of the K lanes sent by the second control unit, and then send the K pieces of fault recovery indication information to the first control unit. Therefore, the first control unit can receive the fault recovery indication information of the K lanes. For example, a computer program runs on the reference apparatus, and when the computer program is run, the reference apparatus performs operations of receiving the fault recovery indication information and sending the fault recovery indication information.

In the method provided in embodiments of this application, for faulty lanes in the N lanes between the two Ethernet interfaces, the first code block obtained based on the service data is stopped from being transmitted through the faulty lanes, to ensure accuracy of transmitting the first code block. In addition, in the method, the second code block is transmitted through the faulty lanes, and the first code block is transmitted through lanes that are not faulty, so that all the N lanes can transmit a code block, and a case in which all the N lanes are unavailable because some of the lanes are faulty is avoided. In this way, lane reliability is high. Because the first code block can continue to be transmitted through the lanes that are not faulty, lane utilization is high.

The foregoing describes embodiments of this application from a first control unit side. The following describes, from a second control unit side, the code block transmission method provided in embodiments of this application. The method may be applied to the second control unit 603 shown in FIG. 6, and the second control unit 603 is connected to the second Ethernet interface 604. As shown in FIG. 18, the method includes but is not limited to S1801 to S1803.

S1801. Obtain statuses of N lanes between a first Ethernet interface and the second Ethernet interface, where the lanes are used to transmit a first code block obtained based on service data, and N is an integer greater than 1.

In a possible implementation, that the second control unit obtains the statuses of the N lanes between the first Ethernet interface and the second Ethernet interface includes but is not limited to the following manner 1 and manner 2.

Manner 1. Obtain a bit error rate of the first code block transmitted through each lane; and determine, for any lane in the N lanes based on the bit error rate of the first code block transmitted through the any lane being greater than a reference threshold, that a status of the any lane indicates that the any lane is faulty.

The reference threshold may be set based on experience or an actual requirement. For example, the manner 1 is performed with reference to related content of determining, based on a bit error rate of a code block, that a lane is faulty in the IEEE 802.3 standard. For example, 10 milliseconds (milliseconds, ms) are used as a detection window for detecting a bit error rate of a code block. When it is detected that the bit error rate (bit error rate, BER) is higher than a high bit error rate (high bit error rate, hi_ber) threshold within the 10 ms window, it is determined that a lane for transmitting the code block is faulty. In other words, the reference threshold may be the hi_ber threshold.

Manner 2. Obtain a locking situation of an AM of each lane; and determine, for any lane in the N lanes based on an AM of the any lane being unlocked, that a status of the any lane indicates that the any lane is faulty.

For example, the manner 2 is performed with reference to related content of determining, based on an AM being unlocked, that a lane is faulty in the IEEE 802.3 standard. For example, 1 ms is used as a detection window for detecting a locking situation of an AM. For any lane, when it is detected that an AM of the any lane is unlocked within the 1 ms window, it is determined that transmission through the any lane is faulty.

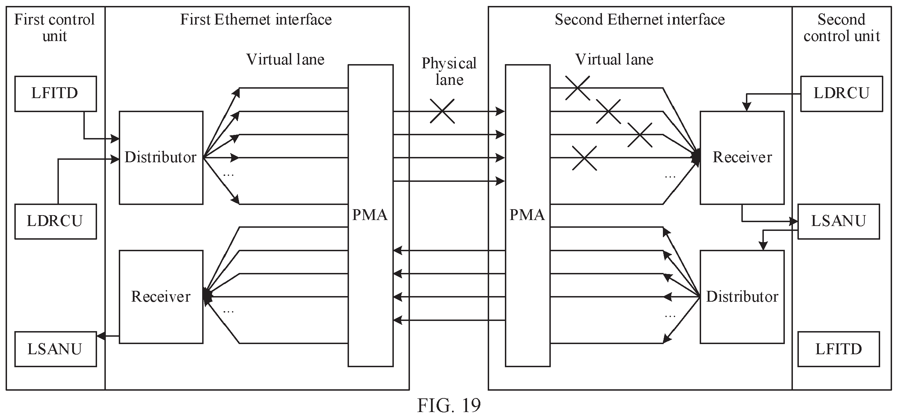

With reference to the manner 1 and the manner 2, it can be learned that, the second control unit actively detects a status of a lane in both the manner 1 and the manner 2. FIG. 19 is a diagram of another code block transmission process according to an embodiment of this application. In FIG. 19, a 100G Ethernet scenario is used as an example. The scenario includes four optical lanes, one optical lane corresponds to one physical lane, and one physical lane corresponds to four virtual lanes. As shown in FIG. 19, one physical lane is faulty, and the physical lane corresponds to four virtual lanes. When the LSANU of the second control unit determines at least one of the following: a bit error rate of a code block received through the physical lane is higher than a reference threshold or AMs of the four virtual lanes are unlocked, it is determined that the physical lane and the four virtual lanes corresponding to the physical lane are faulty.

For example, the method further includes: transmitting, for any lane in the N lanes, faulty lane indication information of the any lane to the first Ethernet interface through the any lane, where the faulty lane indication information indicates a status of the any lane. For example, transmitting the faulty lane indication information of the any lane to the first Ethernet interface through the any lane includes: transmitting a second reference code block to the first Ethernet interface through the any lane, where the second reference code block includes the faulty lane indication information. For the second reference code block, refer to related content of S1301 above. Details are not described herein again.

S1802. Stop, based on the statuses indicating that M lanes in the N lanes are faulty, receiving the first code block from the first Ethernet interface through the M lanes, where M is a positive integer less than N.

In other words, for a faulty lane in the N lanes, the first code block obtained based on the service data is stopped from being received through the lane. For example, in this embodiment of this application, stopping receiving the first code block means discarding the first code block after receiving the first code block. S1802 may correspond to an operation that the LDRCU of the second control unit controls the receiver not to receive data from a faulty lane in FIG. 19.

S1803. Receive the first code block from the first Ethernet interface through N-M lanes in the N lanes, and receive a second code block from the first Ethernet interface through the M lanes, where the second code block is different from the first code block.

The first code block is received through the N-M lanes. In this method, service data transmission can be ensured, and data transmission reliability is high. In a possible implementation, the second code block includes a code block obtained based on a PRBS. In another possible implementation, for any lane in the M lanes, the second code block transmitted through the any lane includes an AM corresponding to the any lane and a scrambled idle code block. S1803 may correspond to an operation of receiving, by the LSANU of the second control unit, a second code block from a faulty lane in FIG. 19.

In some embodiments, when the second control unit receives the second code block transmitted by the first control unit through the faulty lanes, the second control unit obtains statuses of the faulty lanes by detecting the second code block. In other words, after receiving the first code block from the first Ethernet interface through the N-M lanes in the N lanes, and receiving the second code block from the first Ethernet interface through the M lanes, the method further includes: determining, for any transmission lane in the M lanes based on the second code block transmitted through the any lane, whether the any lane returns to normal; when K lanes in the M lanes return to normal, obtaining fault recovery indication information of the K lanes, where the fault recovery indication information of the K lanes indicates that the K lanes return to normal, and K is a positive integer less than or equal to M; and transmitting the fault recovery indication information of the K lanes to the first Ethernet interface through the K lanes.

In a possible implementation, when the second code block includes the code block obtained based on the PRBS, determining, based on the second code block transmitted through the any lane, whether the any lane returns to normal includes: identifying a PRBS feature for the second code block; and determining, based on the PRBS feature identified for the second code block, that the any lane returns to normal. That is, when the second control unit identifies the PRBS feature, it is determined that the status of the lane changes from faulty to normal. When the second control unit does not identify the PRBS feature, it is determined that the faulty lane does not return to normal, that is, the faulty lane is still in a faulty state. For example, the second code block includes a code block obtained based on a PRBS7, and the second control unit identifies a PRBS7 feature for the second code block. When the second control unit identifies the PRBS7 feature, it is determined that the faulty lane returns to normal; or when the second control unit does not identify the PRBS7 feature, it is determined that the faulty lane does not return to normal.

In another possible implementation, when the second code block transmitted through the any lane includes the AM corresponding to the any lane and the scrambled idle code block, determining, based on the second code block transmitted through the any lane, whether the any lane returns to normal includes: performing AM locking on the second code block; and determining, based on the AM in the second code block being successfully locked, that the any lane returns to normal. That is, the second control unit performs AM locking on the second code block, and when the AM is successfully locked, determines that the faulty lane returns to normal, or when the AM fails to be locked, determines that the faulty lane does not return to normal. For a process of performing AM locking on the second code block, refer to related content of performing AM locking on a scrambled idle test pattern in the IEEE 802.3 standard. Details are not described herein again.

In some embodiments, the method further includes: transmitting, for any lane in the N lanes, performance deterioration information of the any lane to the first Ethernet interface through the any lane, where the performance deterioration information indicates a performance deterioration situation of the any lane. The performance deterioration information is transmitted, so that the first control unit connected to the first Ethernet interface can know the performance deterioration situation of each lane. In this way, when a lane is faulty, the first control unit can determine a fault type based on the performance deterioration situation of the lane.

For example, transmitting the performance deterioration information of the any lane to the first Ethernet interface through the any lane includes: transmitting a third reference code block to the first Ethernet interface through the any lane, where the third reference code block is used to form a plurality of 257-bit code blocks with an AM, the third reference code block includes a type field and a status field, a value of the type field indicates that the third reference code block is a code block including the performance deterioration information, and the status field includes the performance deterioration information. For the third reference code block, refer to related content of S1301 above. Details are not described herein again.

In the method provided in embodiments of this application, for faulty lanes in the N lanes between the two Ethernet interfaces, the first code block obtained based on the service data is stopped from being received through the faulty lanes, to ensure accuracy of transmitting the first code block. In addition, in the method, the second code block is received through the faulty lanes, and the first code block is received through lanes that are not faulty, so that all the N lanes can transmit a code block, and a case in which all the N lanes are unavailable because some of the lanes are faulty is avoided. In this way, lane reliability is high. Because the first code block can continue to be received through the lanes that are not faulty, lane utilization is high.

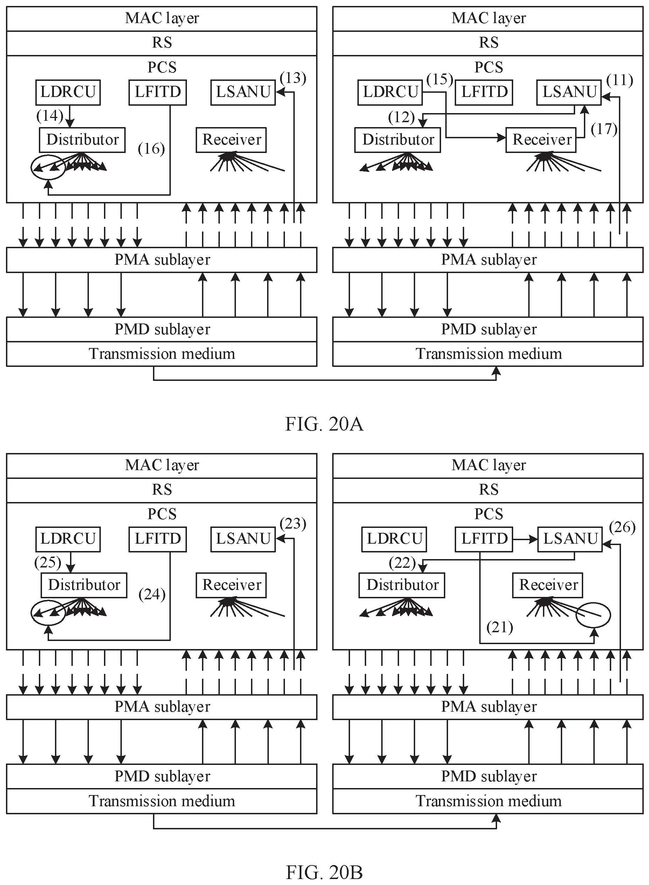

FIG. 20A and FIG. 20B are diagrams of still another code block transmission process according to an embodiment of this application. In both FIG. 20A and FIG. 20B, an example in which a lane for transmitting a code block from a first Ethernet interface to a second Ethernet interface is faulty is used. The first Ethernet interface is connected to a first control unit, and the second Ethernet interface is connected to a second control unit.

As shown in FIG. 20A, the first control unit and the second control unit jointly perform an operation (11) to an operation (17) through interaction, to stop transmitting a first code block through the faulty lane, and transmit a second code block through the faulty lane.

(11) An LSANU of the second control unit determines, based on at least one of a locking status of an AM or a bit error situation of a code block, whether a lane is faulty.

(12) When it is determined that the lane is faulty, the LSANU of the second control unit controls a distributor to send a status of the faulty lane back to the first control unit, where the status indicates that the lane is faulty.

(13) An LSANU of the first control unit obtains the status of the faulty lane.

(14) An LDRCU of the first control unit stops distributing the first code block to the faulty lane.

(15) An LDRCU of the second control unit stops receiving the first code block from the faulty lane.

(16) An LFITD of the first control unit sends the second code block to the faulty lane.

(17) The LSANU of the second control unit receives the second code block from the faulty lane.

As shown in FIG. 20B, the first control unit and the second control unit jointly perform an operation (21) to an operation (26) through interaction, to stop transmitting the second code block through a lane that returns to normal, and transmit the first code block through the lane that returns to normal. The lane that returns to normal is a lane whose status changes from faulty to normal.

(21) An LFITD of the second control unit determines, based on the second code block, whether the faulty lane returns to normal.

(22) When determining that the faulty lane returns to normal, the LFITD of the second control unit controls the LSANU to send a status of the lane that returns to normal back to the first control unit, where the status indicates that the lane is not faulty.

(23) The LSANU of the first control unit obtains the status of the lane that returns to normal.

(24) The LDRCU of the first control unit stops sending the second code block to the lane that returns to normal.

(25) The LDRCU of the first control unit distributes the first code block to the lane that returns to normal.

(26) The LSANU of the second control unit receives the first code block from the lane that returns to normal.

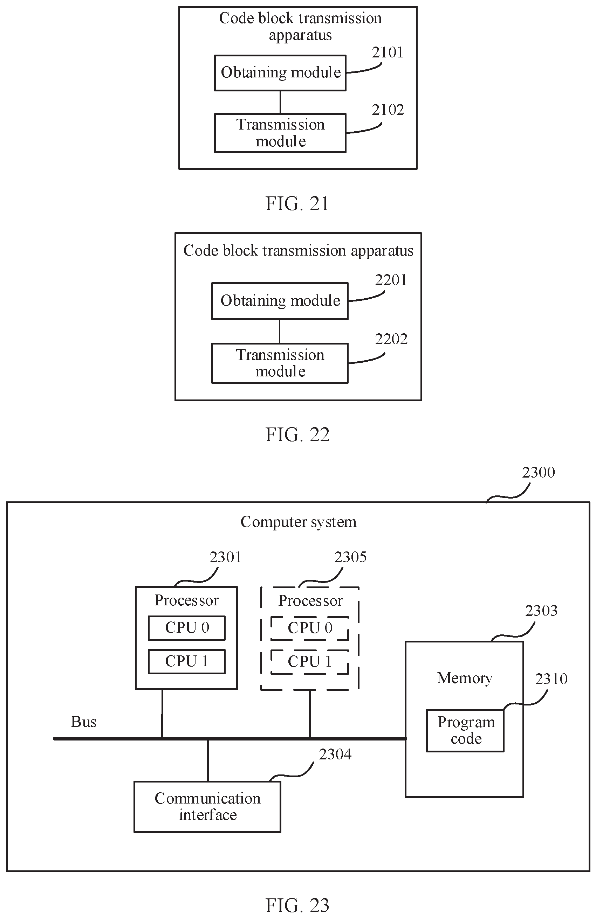

An embodiment of this application further provides a code block transmission apparatus. FIG. 21 is a diagram of a structure of a code block transmission apparatus according to an embodiment of this application. The apparatus is used in the first control unit 601 shown in FIG. 6. Based on a plurality of modules shown in FIG. 21, the apparatus can perform all or some operations in the code block transmission method shown in FIG. 13. It should be understood that the apparatus may include more additional modules than the shown units or omit some of the shown modules. This is not limited in embodiments of this application. As shown in FIG. 21, the apparatus includes an obtaining module 2101 and a transmission module 2102.

The obtaining module 2101 is configured to obtain statuses of N lanes between a first Ethernet interface and a second Ethernet interface, where the lanes are used to transmit a first code block obtained based on service data, and N is an integer greater than 1. The transmission module 2102 is configured to stop, based on the statuses indicating that M lanes in the N lanes are faulty, transmitting the first code block to the second Ethernet interface through the M lanes, where M is a positive integer less than N. The transmission module 2102 is further configured to transmit the first code block to the second Ethernet interface through N-M lanes in the N lanes, and transmit a second code block to the second Ethernet interface through the M lanes, where the second code block is different from the first code block.

In a possible implementation, the obtaining module 2101 is configured to: for any lane in the N lanes, receive, through the any lane, faulty lane indication information of the any lane transmitted by the second Ethernet interface, where the faulty lane indication information indicates a status of the any lane; and obtain the status of the any lane based on the faulty lane indication information of the any lane.

In a possible implementation, the faulty lane indication information is obtained based on at least one of a bit error rate of the first code block transmitted through the any lane or a locking situation of an AM of the any lane.

In a possible implementation, the second code block includes a code block obtained based on a PRBS.

In a possible implementation, for any lane in the M lanes, the second code block transmitted through the any lane includes an AM corresponding to the any lane and a scrambled idle code block.

In a possible implementation, the transmission module 2102 is further configured to: obtain, through K lanes in the M lanes, fault recovery indication information of the K lanes transmitted by the second Ethernet interface, where the fault recovery indication information of the K lanes indicates that the K lanes return to normal, and K is a positive integer less than or equal to M; and stop, based on the fault recovery indication information of the K lanes, transmitting the second code block to the second Ethernet interface through the K lanes, and transmit the first code block to the second Ethernet interface through the K lanes and the N-M lanes.

In the apparatus provided in embodiments of this application, for faulty lanes in the N lanes between the two Ethernet interfaces, the first code block obtained based on the service data is stopped from being transmitted through the faulty lanes, to ensure accuracy of transmitting the first code block. In addition, in the apparatus, the second code block is transmitted through the faulty lanes, and the first code block is transmitted through lanes that are not faulty, so that all the N lanes can transmit a code block, and a case in which all the N lanes are unavailable because some of the lanes are faulty is avoided. In this way, lane reliability is high. Because the first code block can continue to be transmitted through the lanes that are not faulty, lane utilization is high.

An embodiment of this application further provides another code block transmission apparatus. FIG. 22 is a diagram of a structure of another code block transmission apparatus according to an embodiment of this application. The apparatus is used in the second control unit 603 shown in FIG. 6. Based on a plurality of modules shown in FIG. 22, the apparatus can perform all or some operations in the code block transmission method shown in FIG. 18. It should be understood that the apparatus may include more additional modules than the shown modules or omit some of the shown modules. This is not limited in embodiments of this application. As shown in FIG. 22, the apparatus includes an obtaining module 2201 and a transmission module 2202.

The obtaining module 2201 is configured to obtain statuses of N lanes between a first Ethernet interface and a second Ethernet interface, where the lanes are used to transmit a first code block obtained based on service data, and N is an integer greater than 1. The transmission module 2202 is configured to stop, based on the statuses indicating that M lanes in the N lanes are faulty, receiving the first code block from the first Ethernet interface through the M lanes, where M is a positive integer less than N. The transmission module 2202 is further configured to receive the first code block from the first Ethernet interface through N-M lanes in the N lanes, and receive a second code block from the first Ethernet interface through the M lanes, where the second code block is different from the first code block.

In a possible implementation, the obtaining module 2201 is configured to: obtain a bit error rate of the first code block transmitted through each lane; and determine, for any lane in the N lanes based on the bit error rate of the first code block transmitted through the any lane being greater than a reference threshold, that a status of the any lane indicates that the any lane is faulty.

In a possible implementation, the obtaining module 2201 is configured to: obtain a locking situation of an AM of each lane; and determine, for any lane in the N lanes based on the AM of the any lane being unlocked, that a status of the any lane indicates that the any lane is faulty.

In a possible implementation, the transmission module 2202 is further configured to transmit, for any lane in the N lanes, faulty lane indication information of the any lane to the first Ethernet interface through the any lane, where the faulty lane indication information indicates a status of the any lane.

In a possible implementation, the transmission module 2202 is configured to transmit a second reference code block to the first Ethernet interface through the any lane, where the second reference code block includes the faulty lane indication information.

In a possible implementation, the transmission module 2202 is further configured to: determine, for any transmission lane in the M lanes based on the second code block transmitted through the any lane, whether the any lane returns to normal; when K lanes in the M lanes return to normal, obtain fault recovery indication information of the K lanes, where the fault recovery indication information of the K lanes indicates that the K lanes return to normal, and K is a positive integer less than or equal to M; and transmit the fault recovery indication information of the K lanes to the first Ethernet interface through the K lanes.

In a possible implementation, when the second code block includes a code block obtained based on a PRBS, the transmission module 2202 is configured to: identify a PRBS feature for the second code block; and determine, based on the PRBS feature identified for the second code block, that the any lane returns to normal.

In a possible implementation, when the second code block transmitted through the any lane includes an AM corresponding to the any lane and a scrambled idle code block, the transmission module 2202 is configured to: perform AM locking on the second code block; and determine, based on the AM in the second code block being successfully locked, that the any lane returns to normal.

In the apparatus provided in embodiments of this application, for faulty lanes in the N lanes between the two Ethernet interfaces, the first code block obtained based on the service data is stopped from being received through the faulty lanes, to ensure accuracy of transmitting the first code block. In addition, in the apparatus, the second code block is received through the faulty lanes, and the first code block is received through lanes that are not faulty, so that all the N lanes can transmit a code block, and a case in which all the N lanes are unavailable because some of the lanes are faulty is avoided. In this way, lane reliability is high. Because the first code block can continue to be received through the lanes that are not faulty, lane utilization is high.

Refer to FIG. 23. FIG. 23 is a diagram of a structure of a computer system according to an embodiment of this application. For example, as shown in FIG. 23, the computer system is a computer system 2300. The computer system 2300 may be a network device, a routing device, or a switching device. The computer system 2300 shown in FIG. 23 is configured to perform operations in the code block transmission method shown in FIG. 13 or FIG. 18. The computer system 2300 is, for example, a server, and the computer system 2300 may be implemented by using a general bus architecture.

As shown in FIG. 23, the computer system 2300 includes at least one processor 2301, a memory 2303, and at least one communication interface 2304.

The processor 2301 is, for example, a central processing unit (central processing unit, CPU), a digital signal processor (digital signal processor, DSP), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits configured to implement the method provided in embodiments of this application. For example, the processor 2301 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor 2301 may implement or execute various logical blocks, modules, and circuits described with reference to content disclosed in embodiments of this application, or may be a combination of computing functions, for example, a combination of one or more microprocessors, or a combination of a DSP and a microprocessor.

Optionally, the computer system 2300 further includes a bus. The bus is configured to transmit information between components of the computer system 2300. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like. For ease of representation, only one thick line is used to represent the bus in FIG. 23, but this does not mean that there is only one bus or only one type of bus.

The memory 2303 is, for example, a read-only memory (read-only memory, ROM) or another type of static storage device that can store static information and instructions, a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. For example, the memory 2303 exists independently, and is connected to the processor 2301 through the bus. Alternatively, the memory 2303 may be integrated with the processor 2301.

The communication interface 2304 is configured to communicate with another device or a communication network by using any apparatus such as a transceiver. The communication network may be an Ethernet, a radio access network (radio access network, RAN), a wireless local area network (wireless local area network, WLAN), or the like. The communication interface 2304 may include a wired communication interface, and may further include a wireless communication interface. Specifically, the communication interface 2304 may be an Ethernet (Ethernet) interface, a fast Ethernet (fast Ethernet, FE) interface, a gigabit Ethernet (gigabit Ethernet, GE) interface, an asynchronous transfer mode (asynchronous transfer mode, ATM) interface, a WLAN interface, a cellular network communication interface, or a combination thereof. The Ethernet interface may be an optical interface, an electrical interface, or a combination thereof. In this embodiment of this application, the communication interface 2304 may be used by the computer system 2300 to communicate with another device.

During specific implementation, in an embodiment, the processor 2301 may include one or more CPUs, such as a CPU 0 and a CPU 1 shown in FIG. 23. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the computer system 2300 may include a plurality of processors, such as the processor 2301 and a processor 2305 shown in FIG. 23. Each of the processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the computer system 2300 may further include an output device and an input device. The output device communicates with the processor 2301, and may display information in a plurality of manners. For example, the output device may be a liquid crystal display (liquid crystal display, LCD), a light-emitting diode (light-emitting diode, LED) display device, a cathode ray tube (cathode ray tube, CRT) display device, or a projector (projector). The input device communicates with the processor 2301, and may receive an input of a user in a plurality of manners. For example, the input device may be a mouse, a keyboard, a touchscreen device, or a sensor device.

In some embodiments, the memory 2303 is configured to store program code 2310, and the processor 2301 may execute the program code 2310 stored in the memory 2303. The program code 2310 may include one or more software modules. Optionally, the processor 2301 may also store program code or instructions.

In a specific embodiment, the computer system 2300 in this embodiment of this application may include the first module and/or the second module in the foregoing method embodiments. The first module and/or the second module may be implemented by the processor 2301 in the computer system 2300.

The computer system 2300 may further correspond to the apparatuses shown in FIG. 21 and FIG. 22. Each functional module in the apparatus shown in FIG. 21 or FIG. 22 may be implemented by a circuit in the processor 2300.

The steps of the code block transmission method shown in FIG. 13 or FIG. 18 are completed by using an integrated logic circuit of hardware in the processor of the computer system 2300. The steps of the methods disclosed with reference to embodiments of this application may be directly performed by a hardware processor.

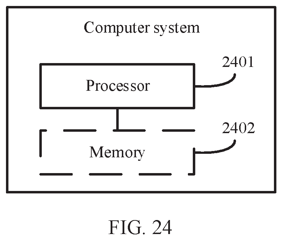

FIG. 24 is a diagram of a structure of another computer system according to an embodiment of this application. The computer system is configured to perform operations in the code block transmission method shown in FIG. 13 or FIG. 18. For example, the computer system is a server. The server may vary greatly due to different configurations or performance. The computer system may include one or more processors 2401, and the one or more processors 2401 are configured to implement the first control unit and/or the second control unit in the method embodiments. As shown in FIG. 24, the computer system may further include one or more memories 2402, where the one or more memories 2402 store at least one computer program, and the at least one computer program is loaded and executed by the one or more processors 2401. For example, the processor 2401 is a CPU. Certainly, the computer system may further include components such as a wired or wireless network interface, a keyboard, and an input/output interface, to perform input/output. The computer system may further include another component configured to implement a device function. Details are not described herein.

An embodiment of this application further provides a communication apparatus. The apparatus includes: a transceiver module, configured to perform a receiving-related and/or sending-related operation in the code block transmission method shown in FIG. 13; and a processing module, configured to perform an operation other than the receiving-related and/or sending-related operation in the code block transmission method shown in FIG. 13. An embodiment of this application further provides another communication apparatus. The apparatus includes: a transceiver module, configured to perform a receiving-related and/or sending-related operation in the code block transmission method shown in FIG. 18; and a processing module, configured to perform an operation other than the receiving-related and/or sending-related operation in the code block transmission method shown in FIG. 18.

An embodiment of this application provides a chip. The chip includes an interface module, and the interface module is configured to perform the code block transmission method shown in FIG. 13 or FIG. 18. An embodiment of this application further provides another chip. The chip includes a processor, and the processor is configured to invoke instructions from a memory and run the instructions stored in the memory, to cause a communication device in which the chip is mounted to perform the code block transmission method shown in FIG. 13 or FIG. 18. For example, the chip further includes an input interface, an output interface, and the memory. The input interface, the output interface, the processor, and the memory are connected through an internal connection path. The memory includes program instructions or code.

An embodiment of this application further provides an electronic device, where the electronic device includes a processor, the processor is coupled to a memory, the memory stores at least one program instruction or code, and the at least one program instruction or the code is loaded and executed by the processor, to cause the electronic device to implement the code block transmission method shown in FIG. 13 or FIG. 18.

An embodiment of this application further provides a communication system, where the communication system includes a first control unit and a second control unit, the first control unit is configured to perform the code block transmission method shown in FIG. 13, and the second control unit is configured to perform the code block transmission method shown in FIG. 18.

An embodiment of this application further provides a computer-readable storage medium, where the computer-readable storage medium stores at least one program instruction or code, and when the program instruction or the code is loaded and executed by a processor of a computer, the computer is caused to implement the code block transmission method in the method embodiments.

An embodiment of this application further provides a computer program or a computer program product, where the computer program or the computer program product includes computer program code, and when the computer program code is run by a computer, the computer is caused to perform the code block transmission method in the method embodiments.

It should be understood that the processor may be a CPU, or may be another general-purpose processor, a DSP, an ASIC, an FPGA or another programmable logic device, a discrete gate or a transistor logic device, a discrete hardware component, or the like. The general-purpose processor may be a microprocessor, any conventional processor, or the like. It should be noted that the processor may be a processor that supports an advanced reduced instruction set computer machines (advanced RISC machines, ARM) architecture.

Further, in an optional embodiment, if one or more of the computer system, the communication apparatus, the chip, or the communication system further includes a memory, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, and is used as an external cache. By way of example but not limitative description, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When the software is used to implement the foregoing embodiments, all or some of the foregoing embodiments may be implemented in a form of a computer program or a computer program product. The computer program or the computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid-state drive, SSD)), or the like.

To clearly describe the interchangeability of hardware and software, the steps and composition of embodiments have been generally described in the foregoing descriptions based on functions. Whether the functions are performed by hardware or software depends on particular applications and design constraint conditions of the technical solutions. A person of ordinary skill in the art may use different methods to implement the described functions for each particular application, but it should not be considered that the implementation goes beyond the scope of this application.

Computer program code used to implement the method in embodiments of this application may be written in one or more programming languages. The computer program code may be provided for a processor of a general-purpose computer, a dedicated computer, or another programmable apparatus for storing annotation content, so that when the program code is executed by the computer or the another programmable apparatus for storing annotation content, functions/operations specified in the flowcharts and/or the block diagrams are implemented. The program code may be executed entirely on a computer, partially on a computer, as a standalone software package, partially on a computer and partially on a remote computer, or entirely on a remote computer or a server.

In the context of embodiments of this application, computer program code or related data may be carried in any appropriate carrier, so that a device, an apparatus, or a processor can perform various types of processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

It can be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and there may be other division manners during actual implementation. For example, a plurality of modules or components may be combined or may be integrated to another system, or some features may be ignored or not performed. In addition, the displayed or discussed mutual couplings or direct couplings or communication connections may be indirect couplings or communication connections implemented through some interfaces, devices, or modules, or may be electrical, mechanical, or other forms of connections.

The modules described as separate parts may or may not be physically separate, and parts displayed as modules may or may not be physical modules, that is, may be located in one position, or may be distributed on a plurality of network modules. Some or all of the modules may be selected based on actual requirements to implement the objectives of the solutions of embodiments of this application.

In addition, the functional modules in embodiments of this application may be integrated into one processing module, or each of the modules may exist alone physically, or two or more modules may be integrated into one module. The integrated module may be implemented in a form of hardware, or may be implemented in a form of a software functional module.

In this application, the terms such as "first" and "second" are used to distinguish between same items or similar items that have basically same functions. It should be understood that there is no logical or time sequence dependency between "first", "second", and "n^{th}", and a quantity and an execution sequence are not limited. It should be further understood that although the following descriptions use the terms such as "first" and "second" to describe various elements, these elements should not be limited by the terms. These terms are simply used to distinguish one element from another. For example, without departing from the scope of the various examples, a first code block may be referred to as a second code block, and similarly, the second code block may be referred to as the first code block.

It should be further understood that sequence numbers of the processes do not mean execution sequences in embodiments of this application. The execution sequences of the processes should be determined based on functions and internal logic of the processes, and should not constitute any limitation on implementation processes of embodiments of this application.

The term "at least one" in this application means one or more, and the term "a plurality of" in this application means two or more. For example, a plurality of range locks means two or more range locks. The terms "system" and "network" in this specification are often used interchangeably.

It should be understood that the terms used in the descriptions of the various examples in this specification are merely intended to describe specific examples but are not intended to constitute a limitation. For example, as used in the descriptions of the various examples and the appended claims, the singular forms "one ("a" and "an")" and "the" are also intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, but does not exclude presence or addition of one or more other features, integers, steps, operations, elements, components, and/or groups thereof.

It should be further understood that, depending on the context, the phrase "if it is determined..." or "if [a stated condition or event] is detected" may be interpreted as meaning "when it is determined..." or "in response to determining..." or "when [the stated condition or event] is detected" or "in response to detecting [the stated condition or event]".

It should be understood that determining B based on A does not mean that B is determined based only on A, and B may alternatively be determined based on A and/or other information.

It should be further understood that "one embodiment", "an embodiment", and "a possible implementation" mentioned throughout the specification mean that specific features, structures, or characteristics related to the embodiment or the implementation are included in at least one embodiment of this application. Therefore, "in one embodiment", "in an embodiment", or "a possible implementation" appearing throughout the specification may not necessarily refer to a same embodiment. In addition, the specific features, structures, or characteristics may be combined in one or more embodiments in any appropriate manner.

The foregoing descriptions are merely optional embodiments of this application, but are not intended to limit this application. Any modification, equivalent replacement, or improvement made within the principle of this application should fall within the protection scope of this application.

## Claims

1. A code block transmission method, wherein the method is applied to a first control unit, the first control unit is connected to a first Ethernet interface, and the method comprises:
obtaining statuses of N lanes between the first Ethernet interface and a second Ethernet interface, wherein the lanes are used to transmit a first code block obtained based on service data, and N is an integer greater than 1;
stopping, based on the statuses indicating that M lanes in the N lanes are faulty, transmitting the first code block to the second Ethernet interface through the M lanes, wherein M is a positive integer less than N; and
transmitting the first code block to the second Ethernet interface through N-M lanes in the N lanes, and transmitting a second code block to the second Ethernet interface through the M lanes, wherein the second code block is different from the first code block.

2. The method according to claim 1, wherein obtaining the statuses of the N lanes between the first Ethernet interface and the second Ethernet interface comprises:
for any lane in the N lanes, receiving, through the any lane, faulty lane indication information of the any lane transmitted by the second Ethernet interface, wherein the faulty lane indication information indicates a status of the any lane; and
obtaining the status of the any lane based on the faulty lane indication information of the any lane.

3. The method according to claim 2, wherein the faulty lane indication information is obtained based on at least one of a bit error rate of the first code block transmitted through the any lane or a locking situation of an alignment marker AM of the any lane.

4. The method according to any one of claims 1 to 3, wherein the second code block comprises a code block obtained based on a pseudo-random binary sequence PRBS.

5. The method according to any one of claims 1 to 3, wherein for any lane in the M lanes, the second code block transmitted through the any lane comprises an alignment marker AM corresponding to the any lane and a scrambled idle code block.

6. The method according to any one of claims 1 to 5, wherein after transmitting the first code block to the second Ethernet interface through the N-M lanes in the N lanes, and transmitting the second code block to the second Ethernet interface through the M lanes, the method further comprises:
obtaining, through K lanes in the M lanes, fault recovery indication information of the K lanes transmitted by the second Ethernet interface, wherein the fault recovery indication information of the K lanes indicates that the K lanes return to normal, and K is a positive integer less than or equal to M; and
stopping, based on the fault recovery indication information of the K lanes, transmitting the second code block to the second Ethernet interface through the K lanes, and transmitting the first code block to the second Ethernet interface through the K lanes and the N-M lanes.

7. A code block transmission method, wherein the method is applied to a second control unit, the second control unit is connected to a second Ethernet interface, and the method comprises:
obtaining statuses of N lanes between a first Ethernet interface and the second Ethernet interface, wherein the lanes are used to transmit a first code block obtained based on service data, and N is an integer greater than 1;
stopping, based on the statuses indicating that M lanes in the N lanes are faulty, receiving the first code block from the first Ethernet interface through the M lanes, wherein M is a positive integer less than N; and
receiving the first code block from the first Ethernet interface through N-M lanes in the N lanes, and receiving a second code block from the first Ethernet interface through the M lanes, wherein the second code block is different from the first code block.

8. The method according to claim 7, wherein obtaining the statuses of the N lanes between the first Ethernet interface and the second Ethernet interface comprises:
obtaining a bit error rate of the first code block transmitted through each lane; and
determining, for any lane in the N lanes based on the bit error rate of the first code block transmitted through the any lane being greater than a reference threshold, that a status of the any lane indicates that the any lane is faulty.

9. The method according to claim 7, wherein obtaining the statuses of the N lanes between the first Ethernet interface and the second Ethernet interface comprises:
obtaining a locking situation of an alignment marker AM of each lane; and
determining, for any lane in the N lanes based on the AM of the any lane being unlocked, that a status of the any lane indicates that the any lane is faulty.

10. The method according to any one of claims 7 to 9, wherein the method further comprises:
transmitting, for any lane in the N lanes, faulty lane indication information of the any lane to the first Ethernet interface through the any lane, wherein the faulty lane indication information indicates a status of the any lane.

11. The method according to claim 10, wherein transmitting the faulty lane indication information of the any lane to the first Ethernet interface through the any lane comprises:
transmitting a second reference code block to the first Ethernet interface through the any lane, wherein the second reference code block comprises the faulty lane indication information.

12. The method according to claim 11, wherein the second reference code block is obtained based on an ordered set O code block.

13. The method according to claim 11, wherein the second reference code block is obtained based on an alignment marker AM, the second reference code block comprises a unique pad UP field, and the UP field comprises the faulty lane indication information.

14. The method according to claim 11, wherein the second reference code block is used to form a plurality of 257-bit code blocks with an alignment marker AM, the second reference code block comprises a type field and a status field, a value of the type field indicates that the second reference code block is a code block comprising the faulty lane indication information, and the status field comprises the faulty lane indication information.

15. The method according to any one of claims 7 to 14, wherein the method further comprises:
transmitting, for any lane in the N lanes, performance deterioration information of the any lane to the first Ethernet interface through the any lane, wherein the performance deterioration information indicates a performance deterioration situation of the any lane.

16. The method according to claim 15, wherein transmitting the performance deterioration information of the any lane to the first Ethernet interface through the any lane comprises:
transmitting a third reference code block to the first Ethernet interface through the any lane, wherein the third reference code block is used to form a plurality of 257-bit code blocks with an alignment marker AM, the third reference code block comprises a type field and a status field, a value of the type field indicates that the third reference code block is a code block comprising the performance deterioration information, and the status field comprises the performance deterioration information.

17. The method according to any one of claims 7 to 16, wherein after receiving the first code block from the first Ethernet interface through the N-M lanes in the N lanes, and receiving the second code block from the first Ethernet interface through the M lanes, the method further comprises:
determining, for any transmission lane in the M lanes based on the second code block transmitted through the any lane, whether the any lane returns to normal;
when K lanes in the M lanes return to normal, obtaining fault recovery indication information of the K lanes, wherein the fault recovery indication information of the K lanes indicates that the K lanes return to normal, and K is a positive integer less than or equal to M; and
transmitting the fault recovery indication information of the K lanes to the first Ethernet interface through the K lanes.

18. The method according to claim 17, wherein when the second code block comprises a code block obtained based on a pseudo-random binary sequence PRBS, determining, based on the second code block transmitted through the any lane, whether the any lane returns to normal comprises:
identifying a PRBS feature for the second code block; and
determining, based on the PRBS feature identified for the second code block, that the any lane returns to normal.

19. The method according to claim 17, wherein when the second code block transmitted through the any lane comprises an alignment marker AM corresponding to the any lane and a scrambled idle code block, determining, based on the second code block transmitted through the any lane, whether the any lane returns to normal comprises:
performing AM locking on the second code block transmitted through the any lane; and
determining, based on the AM in the second code block being successfully locked, that the any lane returns to normal.

20. A code block transmission apparatus, wherein the apparatus is used in a first control unit, and the apparatus comprises:
a transceiver module, configured to perform a receiving-related and/or sending-related operation in the method according to any one of claims 1 to 6; and
a processing module, configured to perform an operation other than the receiving-related and/or sending-related operation in the method according to any one of claims 1 to 6.

21. A code block transmission apparatus, wherein the apparatus is used in a second control unit, and the apparatus comprises:
a transceiver module, configured to perform a receiving-related and/or sending-related operation in the method according to any one of claims 7 to 19; and
a processing module, configured to perform an operation other than the receiving-related and/or sending-related operation in the method according to any one of claims 7 to 19.

22. A chip, wherein the chip comprises an interface module, and the interface module is configured to perform the code block transmission method according to any one of claims 1 to 19.

23. A chip, wherein the chip comprises a processor, and the processor is configured to invoke instructions from a memory and run the instructions stored in the memory, to cause a communication device in which the chip is mounted to perform the code block transmission method according to any one of claims 1 to 19.

24. An electronic device, wherein the electronic device comprises a processor, the processor is coupled to a memory, the memory stores at least one program instruction or code, and the at least one program instruction or the code is loaded and executed by the processor, to cause the electronic device to implement the code block transmission method according to any one of claims 1 to 19.

25. A communication system, wherein the system comprises a first control unit and a second control unit, the first control unit is configured to perform the code block transmission method according to any one of claims 1 to 6, and the second control unit is configured to perform the code block transmission method according to any one of claims 7 to 19.

26. A computer-readable storage medium, wherein the computer-readable storage medium stores at least one program instruction or code, and when the program instruction or the code is loaded and executed by a processor of a computer, the computer is caused to implement the code block transmission method according to any one of claims 1 to 19.
